# EUROPEAN PATENT APPLICATION

(11) **EP 3 495 921 A1**
(43) Date of publication of application: **12.06.2019**
(21) Application number: 17206378.6
(22) Date of filing: 11.12.2017
(51) Int. Cl.: G06F 3/01, G06Q 10/10, H04M 1/725, H04N 7/15, G06F 3/0481, G02B 27/01

(54) **AN APPARATUS AND ASSOCIATED METHODS FOR PRESENTATION OF FIRST AND SECOND VIRTUAL-OR-AUGMENTED REALITY CONTENT**

(71) Applicant: Nokia Technologies Oy, 02610 Espoo (FI)
(72) Inventor: LAAKSONEN, Lasse, 33210 Tampere (FI); RÄMÖ, Anssi, 33720 Tampere (FI); LEHTINIEMI, Arto, 33880 Lempäälä (FI); LEPPÄNEN, Jussi, 33580 Tampere (FI)
(74) Representative: Nokia EPO representatives

(57) **Abstract**

In respect of first and second virtual-or-augmented reality content each comprising at least respective visual imagery for display in a three-dimensional virtual space; based on real-world space information comprising at least a first and second determined sub-space comprising a different part of a real-world space in which a first user is located, and second-user information indicative of the presence of a second user;
provide for display of a three-dimensional hybrid virtual space that is user-explorable, the hybrid virtual space based on a combination of virtual spaces generated from at least the first and the second virtual-or-augmented reality content and respectively presented in positions to correspond to the first and second sub-spaces; and
provide for display to the second user, who is not presented with said hybrid virtual space, of an indication of the boundary of one or both of the first and second sub-spaces.

## Description

### Technical Field

The present disclosure relates to the field of presentation of virtual, augmented and mixed reality. In particular, it is related to the presentation of a hybrid virtual space based on at least first and second virtual-or-augmented reality content, associated apparatus, methods and computer programs.

### Background

The presentation of virtual, augmented and mixed reality environments is becoming common, with augmented reality (AR), virtual reality (VR) and mixed reality (MR) content creators providing more and more content for exploration. Said content may comprise free-viewing-location VR, AR or MR, in which the content and apparatus presenting said content may enable a user to freely explore the virtual space and view objects and imagery from directions of their choosing. Typically, user input to move around such virtual spaces is provided based on tracked translational-physical-user movement in the real-world space in which a user is located. Accordingly, movement of the user around a real-world space provides for corresponding movement around the virtual space generated from the AR, VR or MR content. Given that the real-world space provides a space for providing input to move in a virtual space, management of that real-world space for display of content is important.

The listing or discussion of a prior-published document or any background in this specification should not necessarily be taken as an acknowledgement that the document or background is part of the state of the art or is common general knowledge. One or more aspects/examples of the present disclosure may or may not address one or more of the background issues.

### Summary

In a first example aspect there is provided an apparatus, the apparatus comprising means configured to:
in respect of first virtual-or-augmented reality content and second virtual-or-augmented reality content, the first and second virtual-or-augmented reality content each comprising at least respective visual imagery for display in a three-dimensional virtual space;
based on real-world space information comprising at least a first determined sub-space and a second determined sub-space, each sub-space comprising, at least partly, a different part of a real-world space in which a first user is located, and second-user information indicative of the presence of a second user identified in the same real-world space as the first user and the occurrence of an initiation event;
provide for display of a three-dimensional hybrid virtual space that is user-explorable at least in terms of free user-modification of a viewing location in the hybrid virtual space based on tracked translational-physical-user movement in the real-world space in which the first user is located, the hybrid virtual space based on a combination of virtual spaces generated from at least the first and the second virtual-or-augmented reality content and respectively presented in positions such that the virtual space of the first virtual-or-augmented reality content is presented to correspond to the position of the first sub-space and the virtual space of the second virtual-or-augmented reality content is presented to correspond to position of the second sub-space; and
provide for display to the second user of at least an indication of at least part of the boundary of one or both of the first sub-space and the second sub-space, said indication independent of the display of the hybrid virtual space to the second user.

In one or more examples, the location of the second user in the real-world space relative to the first user is presented in the hybrid virtual space.

In one or more examples, the apparatus is caused to provide signalling for providing for display to the second user of one or more of:
a) an area of the first sub-space;
b) an area of the second sub-space;
c) an indication of whether or not virtual-or-augmented reality content is being captured in the first sub-space;
d) an indication of whether or not virtual-or-augmented reality content is being captured in the second sub-space;
e) an indication of which of the plurality of sub-spaces is private in that at least visual imagery of said sub-space is excluded from captured virtual-or-augmented reality content;
f) an indication of which of the plurality of sub-spaces is private in that at least audio from one or more audio sources identified as being located in said sub-space is excluded from captured virtual-or-augmented reality content.

In one or more examples;
a) the first virtual-or-augmented reality content comprises one of (i) virtual reality content comprising visual imagery of the first determined sub-space of the real-world space in which the first user is located and (ii) augmented reality content; and
b) the second virtual-or-augmented reality content comprises virtual reality content comprising at least visual imagery of a third user located in a different real-world space;
the apparatus, at least in part, caused to provide for visual and audio communication between the first user and the third user.

In one or more examples, the apparatus is caused to provide for said visual and audio communication between the first user and the third user only when the first user is physically present in the second determined sub-space.

In one or more examples;
a) the first virtual-or-augmented reality content comprises first virtual reality content, the first virtual reality content provided for consumption by the first user and the second user; and
b) the second virtual-or-augmented reality content comprises second virtual reality content comprising at least visual imagery of a third user located in a different real-world space;
the apparatus, at least in part, caused to provide for visual and audio communication between the first user and the third user at least in the virtual space of the second virtual reality content as well as a shared virtual reality experience between the first user and the second user at least in the virtual space of the first virtual reality content.

In one or more examples;
the apparatus is caused to provide third virtual-or-augmented content comprising at least captured visual imagery of the first determined sub-space of the real-world space in which the first user is located to a third-user apparatus associated with the third user.

In one or more examples, the third virtual reality content may be equivalent to the first virtual reality content.

In one or more examples, the apparatus is caused to provide third virtual-or-augmented content comprising captured visual imagery of the first user separated from visual imagery of the real-world space in which the user is located to a third-user apparatus associated with the third user for display to the third user, at least when received first-user-location information indicates that the first user is in the second sub-space.

In one or more examples, based on information that virtual-or-augmented reality content is provided for presentation by a second-user apparatus associated with the second user, the virtual-or-augmented reality content comprising at least visual imagery for display in a three-dimensional virtual space that is user-explorable at least in terms of free user-modification of a viewing location in the virtual space based on tracked translational-physical-user movement of the second user in at least part of the first and second determined sub-spaces of the real-world space, which the second user shares with the first user; wherein, based on the initiation event, the apparatus is caused to provide one or both of:
(i) transmittal of first-user-location information, to the second-user apparatus, comprising the location of the first user in the real-world space for display of the location of the first user at a corresponding location in the virtual space presented to the second user; and
(ii) transmittal of the real-world space information, to the second-user apparatus, for display of at least an indicator in the virtual space presented to the second user of the location of the second determined sub-space.

In one or more examples, based on ending of the visual and audio communication between the first user and the third user, provide for display of a three-dimensional virtual space with the visual imagery of the first virtual-or-augmented reality content at positions corresponding to both the first and second determined sub-space to replace the hybrid virtual reality space.

In one or more examples, based on the first virtual-or-augmented reality content being provided for consumption by the first user prior to the initiation event, the apparatus provides for the pausing of the passage of time through the first virtual-or-augmented reality content until a termination event.

In one or more examples, based on one or both of:
(i) an interaction between the first user and the second user in the virtual space in which the visual imagery of the first virtual-or-augmented reality content is presented, the interaction subsequent to ending of the visual and audio communication;
(ii) the user moving to the first determined sub-space from the second determined sub-space, subsequent to ending of the visual and audio communication;
provide for synchronisation of the time through the first virtual-or-augmented reality content for the first user and the second user to thereby enable a shared experience of the first virtual-or-augmented reality content at a common time through the first virtual-or-augmented reality content.

In one or more examples, the synchronisation causes the time through the first virtual-or-augmented reality content for the first user to change to the time through the first virtual-or-augmented reality content based on the time experienced by the second user at the time of said synchronisation.

In one or more examples, in relation to private visual imagery comprising the captured visual imagery of the real-world space in which the first user that is located that is outside of the first determined sub-space, the apparatus is caused to provide for one of:
(i) hiding of said private visual imagery from the third user in the third virtual reality content and (ii) providing the third virtual reality content which does not include said private visual imagery.

In one or more examples, based on the second-user-location information of the second user in the real-world space in which the first user is located, provide for one of:
(i) muting audio from the second user based on said second user being located outside of the first determined sub-space; and
(ii) providing the third virtual-or-augmented reality content which does not include audio from the second user based on said second user being located outside of the first determined sub-space.

In one or more examples, based on a determination that the first user has moved to a location in the second determined sub-space of the real-world space;
provide for sending to a third-user apparatus associated with the third user for providing imagery of the first user thereto one or both of:
i) user-location information in the hybrid virtual space to instruct the rendering, by the third-user apparatus to the third user, of at least an avatar of the first user at a position corresponding to the user-location information;
ii) user-location information in the hybrid virtual space and captured visual imagery of the first user isolated from imagery of the real-world space outside the first determined sub-space to instruct the rendering, by the third-user apparatus to the third user, of the captured visual imagery of the first user overlaid at a position corresponding to the user-location information.

In one or more examples, the initiation event comprises one of:
i) first user acceptance of an incoming virtual reality communication request from a third user in a different real-world space;
ii) user acceptance by a third user of an outgoing virtual reality communication request from the first user, the third user located in a different real-world space;
iii) a user request.

In one or more examples;
i) the first virtual-or-augmented reality content comprises first augmented reality content comprising augmented reality imagery for augmentation of the first determined sub-space of the real-world space and the hybrid virtual space comprises said augmented reality imagery displayed at one or more positions within the first determined sub-space; and
ii) the second virtual-or-augmented reality content comprises second virtual reality content.

In one or more examples, the first augmented reality content at least comprises a virtual user interface, the apparatus caused to provide for display of the virtual user interface and wherein user input to said virtual user interface provides, in said provision of the hybrid virtual space, for one or more of:
a) control of the display of the second virtual reality content;
b) modification of the second virtual reality content; and
c) control of the display of the first augmented reality content in the first sub-space.

In one or more examples, based on user movement in the real-world space from the first sub-space to the second sub-space and thereby from a user location in the hybrid virtual space from where the augmented reality content is presented to where the virtual reality content is presented;
provide for augmentation of the second virtual reality content with the virtual user interface of the first augmented reality content to thereby allow for the user to take the virtual user interface with them as they move to experience the virtual reality content.

In one or more examples, based on user input provide for display of the second virtual reality content in a three-dimensional virtual reality space that replaces the hybrid virtual space, wherein the user location in the virtual reality space at the time said user input is provided is configured to correspond to the user location in the hybrid virtual space relative to the second virtual reality content.

In a further aspect there is provided a method, the method comprising:
in respect of first virtual-or-augmented reality content and second virtual-or-augmented reality content, the first and second virtual-or-augmented reality content each comprising at least respective visual imagery for display in a three-dimensional virtual space;
based on real-world space information comprising at least a first determined sub-space and a second determined sub-space, each sub-space comprising, at least partly, a different part of a real-world space in which a first user is located, and second-user information indicative of the presence of a second user identified in the same real-world space as the first user and the occurrence of an initiation event;
providing for display of a three-dimensional hybrid virtual space that is user-explorable at least in terms of free user-modification of a viewing location in the hybrid virtual space based on tracked translational-physical-user movement in the real-world space in which the first user is located, the hybrid virtual space based on a combination of virtual spaces generated from at least the first and the second virtual-or-augmented reality content and respectively presented in positions such that the virtual space of the first virtual-or-augmented reality content is presented to correspond to the position of the first sub-space and the virtual space of the second virtual-or-augmented reality content is presented to correspond to position of the second sub-space; and
providing for display to the second user, who is not presented with said hybrid virtual space, of at least an indication of at least part of the boundary of one or both of the first sub-space and the second sub-space.

In a further aspect there is provided a computer readable medium comprising computer program code stored thereon, the computer readable medium and computer program code being configured to, when run on at least one processor, perform the method of:
in respect of first virtual-or-augmented reality content and second virtual-or-augmented reality content, the first and second virtual-or-augmented reality content each comprising at least respective visual imagery for display in a three-dimensional virtual space;
based on real-world space information comprising at least a first determined sub-space and a second determined sub-space, each sub-space comprising, at least partly, a different part of a real-world space in which a first user is located, and second-user information indicative of the presence of a second user identified in the same real-world space as the first user and the occurrence of an initiation event;
providing for display of a three-dimensional hybrid virtual space that is user-explorable at least in terms of free user-modification of a viewing location in the hybrid virtual space based on tracked translational-physical-user movement in the real-world space in which the first user is located, the hybrid virtual space based on a combination of virtual spaces generated from at least the first and the second virtual-or-augmented reality content and respectively presented in positions such that the virtual space of the first virtual-or-augmented reality content is presented to correspond to the position of the first sub-space and the virtual space of the second virtual-or-augmented reality content is presented to correspond to position of the second sub-space; and
providing for display to the second user, who is not presented with said hybrid virtual space, of at least an indication of at least part of the boundary of one or both of the first sub-space and the second sub-space.

In a further aspect there is provided an apparatus comprising
at least one processor; and
at least one memory including computer program code,
the at least one memory and the computer program code configured to, with the at least one processor, cause the apparatus to perform at least the following:
in respect of first virtual-or-augmented reality content and second virtual-or-augmented reality content, the first and second virtual-or-augmented reality content each comprising at least respective visual imagery for display in a three-dimensional virtual space;
based on real-world space information comprising at least a first determined sub-space and a second determined sub-space, each sub-space comprising, at least partly, a different part of a real-world space in which a first user is located, and second-user information indicative of the presence of a second user identified in the same real-world space as the first user and the occurrence of an initiation event;
provide for display of a three-dimensional hybrid virtual space that is user-explorable at least in terms of free user-modification of a viewing location in the hybrid virtual space based on tracked translational-physical-user movement in the real-world space in which the first user is located, the hybrid virtual space based on a combination of virtual spaces generated from at least the first and the second virtual-or-augmented reality content and respectively presented in positions such that the virtual space of the first virtual-or-augmented reality content is presented to correspond to the position of the first sub-space and the virtual space of the second virtual-or-augmented reality content is presented to correspond to position of the second sub-space; and
provide for display to the second user, who is not presented with said hybrid virtual space, of at least an indication of at least part of the boundary of one or both of the first sub-space and the second sub-space.

The present disclosure includes one or more corresponding aspects, examples or features in isolation or in various combinations whether or not specifically stated (including claimed) in that combination or in isolation. Corresponding means and corresponding functional units (e.g., function enabler, AR/VR graphic renderer, display device) for performing one or more of the discussed functions are also within the present disclosure.

Corresponding computer programs for implementing one or more of the methods disclosed are also within the present disclosure and encompassed by one or more of the described examples.

The above summary is intended to be merely exemplary and non-limiting.

### Brief Description of the Figures

A description is now given, by way of example only, with reference to the accompanying drawings, in which:
figure 1 illustrates an example apparatus for providing for presentation of a hybrid virtual space;
figure 2 shows an example of a real-world space;
figure 3 shows division of the example real-world space into two sub-spaces;
figure 4 shows two different example real-world spaces;
figure 5 shows the two different example real-world spaces of figure 4 each divided into two sub-spaces;
figure 6 shows an example of a hybrid virtual space generated from virtual-or-augmented reality content captured from the two different real-world spaces;
figure 7 shows a first example illustrating how movement of users in the real-world spaces is provided for in display of the hybrid virtual space;
figure 8 shows a second example illustrating how movement of users in the real-world spaces is provided for in display of the hybrid virtual space;
figure 9 shows a second example real-world space;
figure 10 shows the second example real-world space divided into two sub-spaces with virtual reality content displayed at a position to correspond to one of the sub-spaces and augmented reality content displayed at a position to correspond to the other of the sub-spaces;
figure 11 shows an example movement of a user in the hybrid virtual space with a virtual user interface;
figure 12 shows a second example movement of a user in the hybrid virtual space with a virtual user interface;
figure 13 shows the presentation of the virtual reality content previously presented in one of the sub-spaces of figure 12;
figure 14 shows an example in which first and second users are experiencing virtual reality and one of the user's is subsequently presented with a hybrid virtual space;
figure 15 shows an example in which the hybrid virtual space shown in figure 14 is no longer presented;
figure 16 shows an example in which the VR communication between the first user and the third user ending;
figure 17 shows a flowchart illustrating an example method; and
figure 18 shows a computer readable medium.

### Description of Example Aspects

Virtual reality (VR) may use a VR display comprising a headset, such as glasses or goggles or virtual retinal display, or one or more display screens that surround a user to provide the user with an immersive virtual experience. A virtual reality apparatus, which may or may not include the VR display, may provide for presentation of multimedia VR content representative of a virtual reality scene to a user to simulate the user being present within the virtual reality scene. Accordingly, in one or more examples, the VR apparatus may provide signalling to a VR display for display of the VR content to a user while in one or more other examples, the VR apparatus may be part of the VR display, e.g. part of the headset. The virtual reality scene may therefore comprise the VR content displayed within a three-dimensional virtual reality space so that the user feels immersed in the scene, as if they were there, and may look around the VR space at the VR content displayed around them. The virtual reality scene may replicate a real world scene to simulate the user being physically present at a real world location or the virtual reality scene may be computer generated or a combination of computer generated and real world multimedia content. Thus, the VR content may be considered to comprise the imagery (e.g. static or video imagery), audio and/or accompanying data from which a virtual reality scene may be generated for display. The VR apparatus may therefore provide the VR scene by generating the virtual, three-dimensional, VR space in which to display the VR content. The virtual reality scene may be provided by a panoramic video (such as a panoramic live broadcast), comprising a video having a wide or 360° field of view (or more, such as above and/or below a horizontally oriented field of view). A panoramic video may have a wide field of view in that it has a spatial extent greater than a field of view of a user or greater than a field of view with which the panoramic video is intended to be displayed.

The VR content provided to the user may comprise live or recorded images of the real world, captured by a VR content capture device, for example. An example VR content capture device comprises a Nokia Technologies OZO device. As the VR scene is typically larger than a portion a user can view with the VR display, the VR apparatus may provide, for display on the VR display, a virtual reality view of the VR scene to a user, the VR view showing only a spatial portion of the VR content that is viewable at any one time. The VR apparatus may provide for panning around of the VR view in the VR scene based on movement of a user's head and/or eyes. A VR content capture device may be configured to capture VR content for display to one or more users. A VR content capture device may comprise one or more cameras and, optionally, one or more (e.g. directional) microphones configured to capture the surrounding visual and aural scene from a capture point of view. In some examples, the VR content capture device comprises multiple, physically separate cameras and/or microphones. Thus, a musical performance may be captured (and recorded) using a VR content capture device, which may be placed on stage, with the performers moving around it or from the point of view of an audience member. In each case a consumer of the VR content may be able to look around using the VR display of the VR apparatus to experience the performance at the capture location as if they were present.

Augmented reality (AR) may use an AR display, such as glasses or goggles or a virtual retinal display, to augment a view of the real world (such as seen through the glasses or goggles) with computer generated content. An augmented reality apparatus, which may or may not include an AR display, may provide for presentation of multimedia AR content configured to be overlaid over the user's view of the real-world. Thus, a user of augmented reality may be able to view the real world environment around them, which is augmented or supplemented with content provided by the augmented reality apparatus, which may be overlaid on their view of the real world and/or aurally overlaid over an aural real world scene they can hear. The content may comprise multimedia content such as pictures, photographs, video, diagrams, textual information, aural content among others. Thus, while augmented reality may provide for direct viewing of the real world with the addition of computer generated graphics and/or audio content, a user of virtual reality may only be able to see content presented on the VR display of the virtual reality apparatus substantially without direct viewing of the real world.

The virtual reality content may comprise, and a VR apparatus presenting said VR content may provide, predefined-viewing-location VR or free-viewing-location VR. In predefined-viewing-location VR, the location of the user in the virtual reality space may be fixed or follow a predefined path. Accordingly, a user may be free to change their viewing direction with respect to the virtual reality imagery provided for display around them in the virtual reality space, but they may not be free to arbitrarily change their viewing location in the VR space to explore the VR space. Thus, the user may experience such VR content from a fixed point of view or viewing location (or a limited number of locations based on where the VR content capture devices were located in the scene). In some examples of predefined-viewing-location VR the imagery may be considered to move past them. In predefined-viewing-location VR content captured of the real world, the user may be provided with the point of view of the VR content capture device. Predefined-viewing-location VR content may provide the user with three degrees of freedom in the VR space comprising rotation of the viewing direction around any one of x, y and z axes and may therefore be known as three degrees of freedom VR (3DoF VR).

In free-viewing-location VR, the VR content and VR apparatus presenting said VR content may enable a user to be free to explore the virtual reality space. Thus, the VR apparatus may allow for the user to be provided with a free point of view or viewing location in the virtual reality space along with a free viewing direction. Free-viewing-location VR is also known as six degrees of freedom (6DoF) VR or volumetric VR to those skilled in the art. Thus, in 6DoF VR the user may be free to look in different directions around the VR space by modification of their viewing direction and also free to change their viewing location (their virtual location) in the VR space by translation along any one of orthogonal x, y and z axes. The movement available in a 6DoF virtual reality space may be divided into two categories: rotational and translational movement (with three degrees of freedom each). Rotational movement enables a user to turn their head to change their viewing direction. The three rotational movements are around x-axis (roll), around y-axis (pitch), and around z-axis (yaw). Translational movement means that the user may also change their point of view in the space to view the VR space from a different virtual location, i.e., move along the x, y, and z axes according to their wishes. The translational movements may be referred to as surge (x), sway (y), and heave (z) using the terms derived from ship motions.

Mixed reality comprises a type of augmented and virtual reality in which a three-dimensional model of the real-world environment is used to enable virtual objects to appear to interact with real-world objects in terms of one or more of their movement and appearance.

One or more examples described herein relate to 6DoF virtual or augmented reality content in which the user is at least substantially free to move in the virtual space by user-input through physically moving or, for example, via a dedicated user interface (Ul). The virtual space comprises a virtual environment in which visual imagery and/or spatial audio is arranged for presentation to the user and within which the user can move.

Spatial audio comprises audio presented in such a way to a user that it is perceived to originate from a particular location, as if the source of the audio was located at that particular location. Thus, virtual reality content may be provided with spatial audio having directional properties, such that the audio is perceived to originate from a point in the VR space, which may be linked to the imagery of the VR content. Augmented reality content may be provided with spatial audio, such that the spatial audio is perceived as originating from real world objects visible to the user and/or from augmented reality graphics overlaid over the user's view.

Spatial audio may be presented independently of visual virtual reality or visual augmented reality content. Spatial audio, in some examples, may be presented as augmented reality content such that it augments the aural scene perceived by a user in the case the user is able to hear the real-world aural scene as well as the spatial audio. In other examples, the spatial audio may be presented and the audio from the real-world may be blocked out resulting in an experience similar to visual virtual reality but in the audio domain. In other examples, spatial audio may be presented in mixed reality with a room impulse response effect to replicate how the sound would be heard if its source was in the real-world room/space with the user. As an example of independent presentation of spatial audio, a user may wear headphones and, as they explore the real world, they may be presented with spatial audio such that the audio appears to originate at particular locations associated with real world objects or locations. For example, a city tour could be provided by a device that tracks the location of the user in the city and presents audio describing points of interest as spatial audio such that the audio is perceived to originate from the point of interest around the user's location. One or more of the embodiments described herein may present spatial audio.

The spatial positioning of the spatial audio may be provided by 3D audio effects, such as those that utilise a head related transfer function, to create a spatial audio space in which audio can be positioned for presentation to a user. Spatial audio may be presented by headphones by using head-related-transfer-function (HRTF) filtering techniques or, for loudspeakers, by using vector-base-amplitude panning techniques to position the perceived aural origin of the audio content. In other embodiments ambisonic audio presentation may be used to present spatial audio. Spatial audio may use one or more of volume differences, timing differences and pitch differences between audible presentation to each of a user's ears to create the perception that the origin of the audio is at a particular location in space.

The consumption of virtual, mixed or augmented reality content (referred to as virtual-or-augmented reality content herein for brevity) may require the use of a physical real-world space in which the user can move. The real-world space may comprise a room or a predetermined area of a larger room or indoor or outdoor space. The movement of the user, as mentioned above, may be used as user-input to control the user's location in a virtual space provided based on the virtual or augmented reality content. In particular, forfree-viewing-location virtual or augmented reality content the physical space available to the user to look at virtual objects and scenes from different angles may be important for the effective, immersive consumption of such content.

While a real-world space may be used as an "input area" to move around a virtual space while consuming virtual or augmented reality content, it may also include other objects, people or users. The other users may simply be present in the space and may or may not be consuming virtual-or-augmented reality content of their own. In one or more examples, two or more users may be consuming the same virtual-or-augmented reality content and may be visible to one another in the virtual space generated for presentation of visual imagery and audio of the virtual-or-augmented reality content.

Communication between users in different physical locations may also be facilitated using a virtual or augmented reality experience. In one or more examples, a user may be presented with virtual-or-augmented reality content of another user and vice versa, and may thereby be enabled to see and communicate with the other user.

The virtual spaces generated based on virtual-or-augmented reality content may be of a scale smaller, the same or larger than that the size of the real-world space.

To summarise, in one or more examples, it may be important to manage the presentation of virtual-or-augmented reality content in real-world spaces that may be shared with other people or other consumers of virtual-or-augmented reality content. The size of virtual, mixed or augmented reality spaces may vary and therefore it may be important to manage a single real-world space that may host multiple virtual spaces. Further, given the range of applications that virtual or augmented reality can be used for, such as exploring virtual scenes or for communication, it may be realised that the use of the real-world space for multiple virtual or augmented reality experiences may be possible and the management of the space may be important.

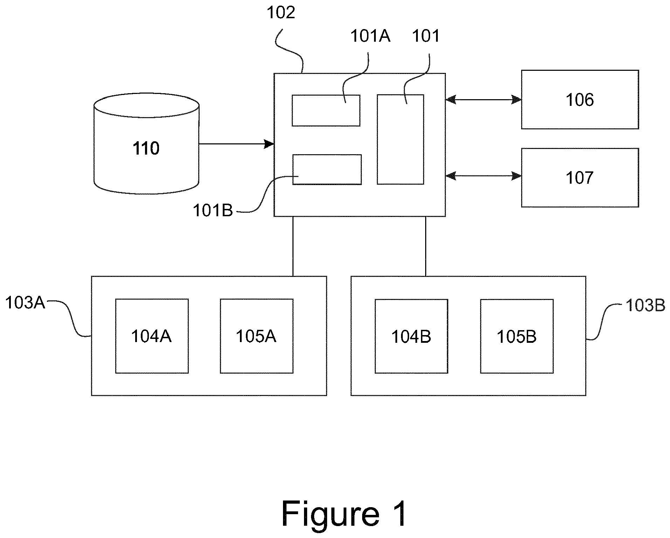

Figure 1 shows an example system 100 for presentation of first and second virtual-or-augmented reality content to a user in a room with a second user. The system 100 includes an example apparatus 101 for presentation of first and second virtual-or-augmented reality content based on real-world space information.

The apparatus 101 may comprise or be connected to a processor 101A and a memory 101B and may be configured to execute computer program code. The apparatus 101 may have only one processor 101A and one memory 101B but it will be appreciated that other embodiments may utilise more than one processor and/or more than one memory (e.g. same or different processor/memory types). Further, the apparatus 101 may be an Application Specific Integrated Circuit (ASIC).

The processor may be a general purpose processor dedicated to executing/processing information received from other components, such as from a location tracker 106 and a content store 110, in accordance with instructions stored in the form of computer program code in the memory. The output signalling generated by such operations of the processor is provided onwards to further components, such as to a virtual, augmented or mixed reality presentation device 103A associated with the user (not shown in figure 1).

The memory 101B (not necessarily a single memory unit) is a computer readable medium (solid state memory in this example, but may be other types of memory such as a hard drive, ROM, RAM, Flash or the like) that stores computer program code. This computer program code stores instructions that are executable by the processor, when the program code is run on the processor. The internal connections between the memory and the processor can be understood to, in one or more example embodiments, provide an active coupling between the processor and the memory to allow the processor to access the computer program code stored on the memory.

In this example, the respective processors and memories are electrically connected to one another internally to allow for electrical communication between the respective components. In this example, the components are all located proximate to one another so as to be formed together as an ASIC, in other words, so as to be integrated together as a single chip/circuit that can be installed into an electronic device. In some examples one or more or all of the components may be located separately from one another.

The apparatus 101, in this example, forms part of a virtual reality apparatus 102 for presenting visual imagery in virtual reality as well as augmented reality and mixed reality. In one or more other examples, the apparatus 101 may form part of one of a VR apparatus and an AR apparatus. In one or more examples, the apparatus 100 may be part of a mixed reality apparatus. In this example, the processor 101A and memory 101B is shared by the VR apparatus 102 and the apparatus 101, but in other examples, they may have their own processors and/or memory.

The VR apparatus 102 or the VR apparatus 102 under the control of the apparatus 101 may provide for display of virtual reality content comprising at least visual imagery displayed in a virtual space that is viewable by a user using a display 104A which is part of presentation device 103A. The presentation device 103A, in this example, may comprise a VR headset.

The VR apparatus 102 or the VR apparatus 102 under the control of the apparatus 101 may provide for aural presentation of audio content associated with virtual-or-augmented reality content using the headphones 105A which are part of the presentation device 103A.

The apparatus 101 may receive signalling indicative of the location of the user from a location tracker 106. The location tracker 106 may comprise a single device or a plurality of sub devices that each perform one or more of the following functions: determine the first user's head orientation, determine user-location information comprising the first user's location in the real world space, determine second-user information comprising the presence or absence of a second user in the real-world space, determine the head orientation of a second user, and determine second-user-location information comprising the second user's location. The user may have one or more tags or markers on their person, which the tracker 106 may use to determine one or more of their location, body/head orientation or any other positional/movement characteristic it is configured to determine. In other examples, the tracker may use analysis of captured sensor data, such as visual data from a camera, to identify and recognise the first user 201 (and/or second user 202) and determine one or more of their location, body/head orientation or any other positional/movement characteristic it is configured to determine. It will be appreciated that such functionality may be provided by a plurality of independent apparatuses that are configured to report to the apparatus 101 or VR apparatus 102 as required.

The apparatus 101 may receive signalling representative of captured virtual reality content from one or more content capture devices 107. As mentioned above, the capture device 107 may comprise a VR content capture device such as a Nokia OZO camera. The capture device 107 may be configured to capture at least visual imagery of a space in which it is located such that a three-dimensional representation of at least part of the space is presentable in virtual reality. The signalling provided by the capture device 107 to the apparatus 101 may comprise depth information of the space it captures and any other information required or desired to create such a virtual three-dimensional representation.

In one or more examples, a second-user apparatus and associated VR/AR/MR apparatus for example (not shown), which may have a similar general configuration as apparatus 101 in system 100, may provide for presentation of virtual, mixed or augmented reality to a second user (not shown in figure 1). The apparatus 101 and second-user apparatus may be in communication with each other to perform one or more of the functions described herein. The apparatus 101 and second-user apparatus may provide for the user and second user to have a shared experience in a virtual space, such as enabling them to explore the virtual space together and/or see each other or a representation of each other therein.

In one or more examples and as presented in figure 1, the apparatus 101 performs the function of such a second-user apparatus. Thus, a second presentation device 103B, such as a VR headset, may be provided with a corresponding display 104B and headphones 105B for presentation of content to the second user.

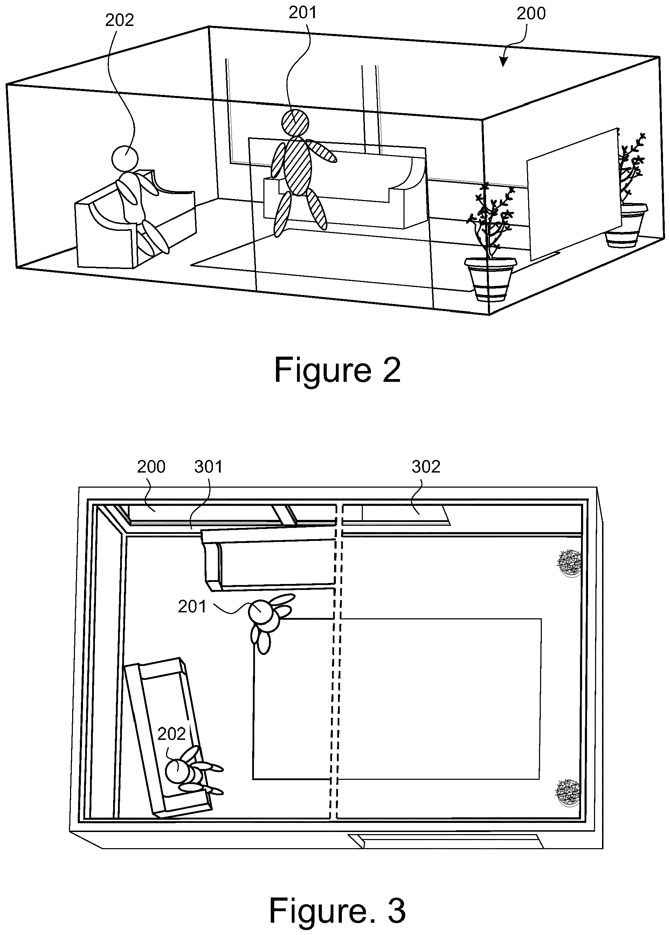

Figure 2 shows an example real-world space 200 comprising a room. In one or more other examples, the real-world space may be a portion of an open area, such as an outdoor or indoor area, available to the user. A first user 201 is present in the space 200 as well as a second user 202. Although referred to as a "second user" in one or more examples the second user may or may not be a consumer of virtual, mixed or augmented reality content. The real-world space 200 provides an area in which the first user 201 and/or second user 202 can move to provide for corresponding movement in a virtual space presented to them by the VR apparatus 102. The virtual space may be of a scale the same size as or smaller than the size of the space 200. Accordingly, the user may utilise some or all of the space available in the real-world space to provide for movement through the virtual space presented to them. In other examples, the virtual space may be of a scale larger than the real-world space 200. In such examples user input other than physical movement may be provided to move to parts of the virtual space that are inaccessible due to the size limitation of the real-world space 200.

The first user 201 may be presented with virtual-or-augmented reality content via VR headset 103A. In one or more examples, the second user 202 may be presented with virtual-or-augmented reality content via VR headset 103B. In one or more examples, the second user 202 may not be presented with virtual-or-augmented reality content.

Figure 3 shows the same real-world space 200 having been divided into sub-spaces. Thus, in this example, one part of the real-world space 200, which is available for a virtual experience, happens to have been designated a first sub-space 301 and a different part of the same room happens to have been designated a second sub-space 302. The dividing of the space 200 into sub-spaces or, in particular, the relative sizes of the sub-spaces, may be one or more of predetermined, based on the size and/or shape of the space 200 or may be based on the size of the virtual space that may be generated from the virtual-or-augmented reality content to be presented to the first user 201. In this example, the sub-spaces 301, 302 divide the room in half and are non-overlapping, although in other examples the sub-spaces 301, 302 may have different relative proportions with respect to the room and may or may not be overlapping. The sub-spaces 301, 302 may be continuous and may therefore be directly adjacent one another or may be discontinuous and may therefore be at spaced locations in the real-world space 200.

The apparatus 101 may be provided with real-world space information which may define the configuration of the sub-spaces 301, 302 in terms of one or more of the size, relative size, relative locations, absolute locations or any other information relating to the configuration of the sub-spaces 301, 302 in the space 200. The apparatus 101 may provide for the determination of the real-world space information using one or more sensors in the space 200 or may be pre-programmed with said information. The real-world space information may thus comprise information defining at least the first determined sub-space 301 and the second determined sub-space 302, each sub-space comprising a different part of a real-world space 200 in which the first user 201 is located.

As described in more detail below, the first and second sub-spaces 301, 302 may each provide a physical area or volume in which to explore different, first and second virtual-or-augmented reality content. Thus, while each of the first and second virtual-or-augmented reality content may contain information to generate a distinct virtual space for presentation of the associated visual and audio content therein, the apparatus 101, in this example, provides for presentation of a hybrid virtual space. The hybrid virtual space may be considered as such because it is based on two or more instances of virtual-or-augmented reality content. The hybrid virtual space may include part of the virtual space, with the respective visual imagery and audio content, from the first virtual-or-augmented reality content and the virtual space, with the respective visual imagery and audio content, from the second virtual-or-augmented reality content displayed spatially alongside one another, in different parts of the hybrid virtual space, based on the configuration of the first and second sub-spaces 301, 302 in the real-world space 200. Accordingly, the hybrid virtual space can be considered to comprise at least part of the three-dimensional space defined by the first virtual-or-augmented reality content presented together with the three-dimensional space defined by the second virtual-or-augmented reality content.

Thus, user-movement in the first sub-space 301 may provide for movement within the visual imagery / audio of the first space of the first virtual-or-augmented reality content and user-movement in the second sub-space 302 may provide for movement within the visual imagery / audio of the second space of the second virtual-or-augmented reality content. The first user 201 may be able to physically move between the sub-spaces 301, 302 in order to move between the different virtual spaces of the first and second virtual-or-augmented reality content. The hybrid virtual space that may be generated based on the different virtual-or-augmented reality content is thus user-explorable at least in terms of free user-modification of a viewing location in the hybrid virtual space. The first user 201 may be free to change their viewing direction and viewing location within the hybrid virtual space. The apparatus may receive information from the tracker 106, which may track translational-physical-user movement of the first user 201 (and optionally user 202 or other users) in the sub-spaces 301, 302 of the real-world space 200 in which the first user 201 is located. Translational-physical-user movement may comprise movement of one of the users in the real-world space whereby they translate from one location to another.

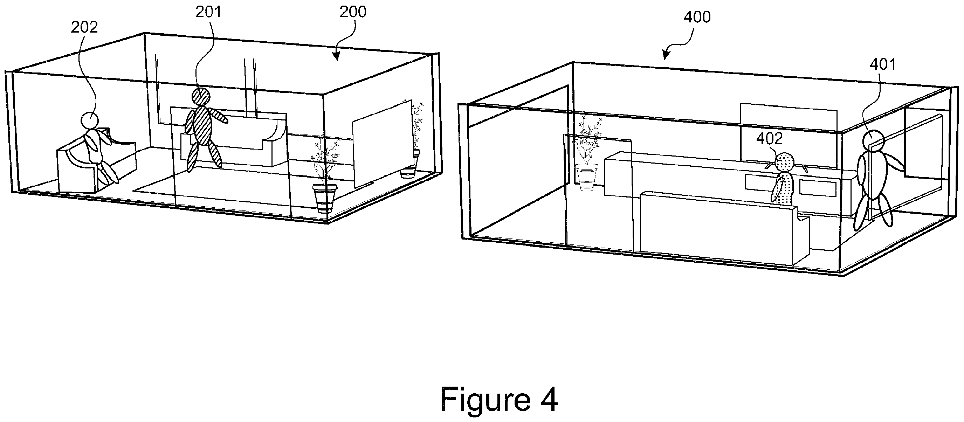

We will now describe a first example embodiment. Figure 4 shows the real-world space 200 with the first and second users 201, 202 therein. A different real-world space 400 is also shown with a third user 401 and, optionally, a fourth user 402 therein. The first user 201 and the third user 401 may communicate using virtual reality. Accordingly, the first user 201 may be presented with captured virtual reality content of the third user 401 in their real-world space 400. Likewise, the third user 401 may be presented with captured virtual reality content of the first user 201 in their real-world space 200, such as by content capture device 107. In the example that follows it is assumed that the third user 401 is using an apparatus similar to the first user. In one or more examples the same apparatus 101 may provide for the VR communication for both users.

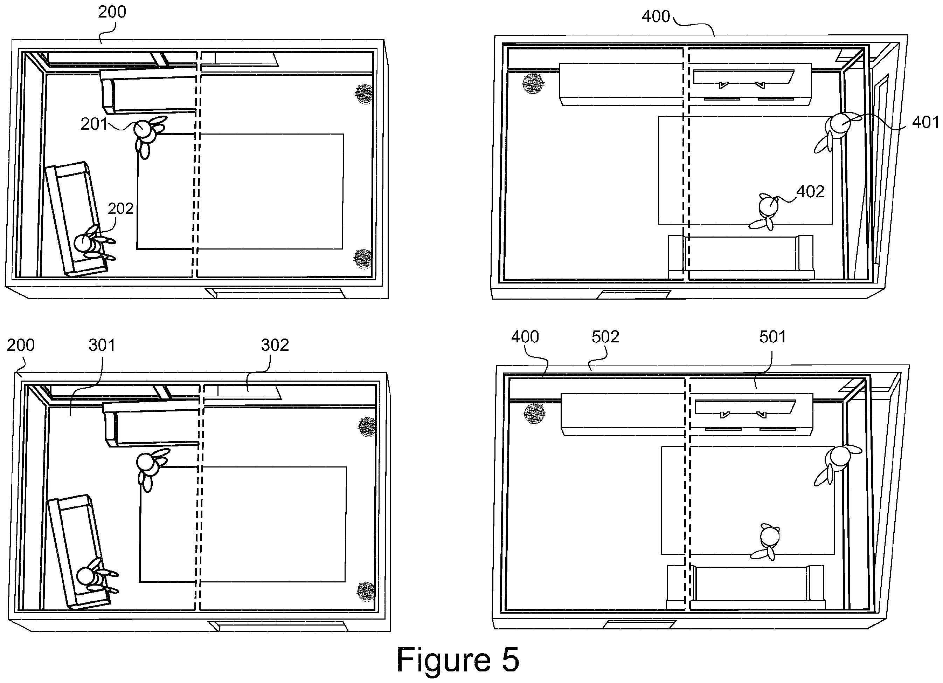

Figure 5, similar to figure 3, shows how the real-world spaces 200, 400 may have associated real-world space information such that the spaces 200, 400 each have at least two designated sub-spaces. The real-world space information for real-world space 200, as mentioned above, divides the space into first sub-space 301 and second sub-space 302. The real-world space information for real-world space 400 may divide the space into a first sub-space 501 and second sub-space 502, as shown in the lower half of figure 5. The real-world space information may be determined based on information from the capture device 107 and/or sensors of the tracker 106 and/or, more generally, sensors for determination of room geometry. In one or more other examples, the real-world space information may be user set. For example, the user may designate which parts of the room 200 are defined as the first and second sub-spaces 301, 302. In one or more examples, the real-world space information is determined based on information received regarding the size of the virtual space defined in the virtual-or-augmented reality content received or about to be received for providing virtual reality based communication between the two parties (first user 201 and third user 401). Thus, if the third user 401 is in a small room or space 400, then the size of the virtual space defined in the virtual-or-augmented reality content may be small, and accordingly, the size of the second sub-space 302 may only need to be small. In other examples, if the third user 401 is in a large room or space 400, then the size of the virtual space defined in the virtual-or-augmented reality content may be large, and accordingly, the size of the second sub-space 302 may be made larger to accommodate the size of the virtual space for presentation therein. In the examples that follow, the real-world spaces 200, 400 are similar sizes and the sub-spaces 301, 302, 501, 502 divide their respective real-world spaces substantially in half, although this need not be the case.

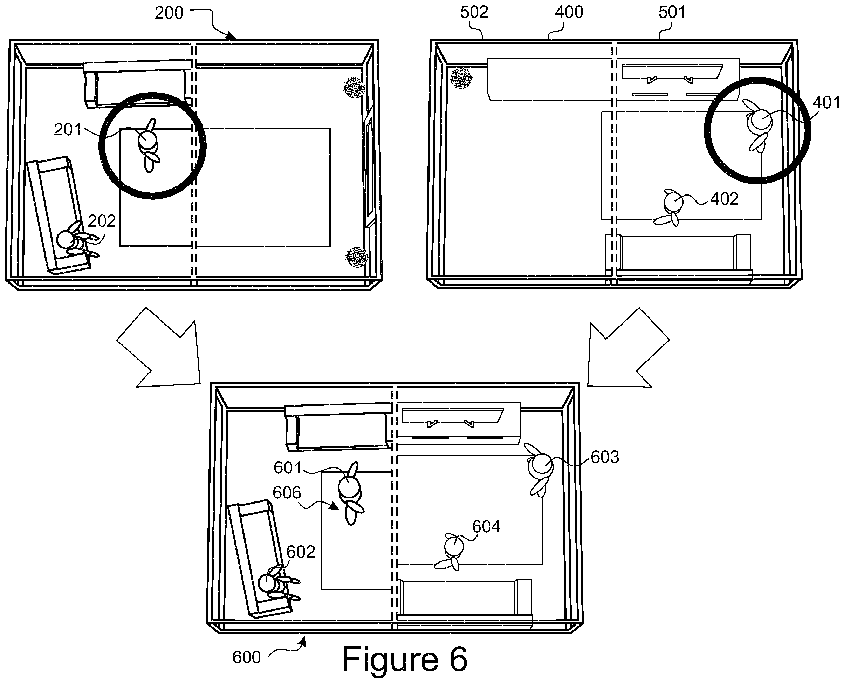

The example of figure 6 shows the presentation of a three-dimensional hybrid virtual space 600 based on virtual-or-augmented reality content captured of the real-world spaces 200 and 400.

The apparatus 101 may provide for presentation of the hybrid virtual reality space to the first user 201 based on first and second virtual-or-augmented reality content. In the present example, the first virtual-or-augmented reality content may comprise captured virtual reality content of the first sub-space 301 of the real-world space 200. Thus, the first user 201, when immersed in the hybrid virtual space, may be presented with live virtual reality content of the first sub-space 301 of the room 200 he/she is in. In one or more other examples, the first virtual-or-augmented reality content may comprise augmented reality content.

In the present example, the second virtual-or-augmented reality content comprises virtual reality content comprising at least visual imagery 603 of the third user 401 located in the different real-world space 400 and, in particular, in the first sub-space 501 of the real-world space 400. The visual imagery 603 may comprise captured imagery or an avatar or the like.

The first and second virtual-or-augmented reality content may each comprise information for generation of three-dimensional virtual space with at least visual imagery therein independently of one another. Further the first and second virtual-or-augmented reality content may comprise audio and, in one or more examples, spatial audio, which may provide for presentation of audio from a specific direction to correspond to the position of the audio source in the virtual space of content relative to a user location.

In one or more examples, the apparatus 101, along with the VR apparatus 102, is caused to provide for display of a three-dimensional hybrid virtual space 600 based on the following:
i) the real-world space information that defines at least a first determined sub-space 301 and a second determined sub-space 302, each sub-space comprising a different part of the real-world space 200 in which the first user 201 is located; and
ii) the occurrence of an initiation event, which may comprise the initiation of the VR based communication between the first and third users 201, 401.

The apparatus 101 may further receive second-user information comprising information indicative of the presence of the second user 202 identified in the same real-world space 200 as the first user 201. The second user information may be provided, for example, by the tracker 106 or other sensor that reports to the apparatus 101.

The second-user information may include information to identify a second-user apparatus of said second user, the second-user apparatus enabling display of information to the second user. In one or more examples, the second-user apparatus, as mentioned above, may comprise the second presentation device 103B or may comprise a projector for projecting information into a real-world space. Signalling may be provided to said presentation device 103B or said projector by said apparatus 101, as will be described below.

The three-dimensional hybrid virtual space 600 of this and other examples is user-explorable at least in terms of free user-modification of a viewing location in the virtual space based on tracked translational-physical-user movement in the real-world space 200 in which a first user 201 is located.

The hybrid virtual space 600 is based on a combination of virtual spaces generated from at least the first and the second virtual-or-augmented reality content and respectively presented in positions in the hybrid virtual space such that the virtual space of the first virtual-or-augmented reality content is presented to correspond to the position of the first sub-space 301 and the virtual space of the second virtual-or-augmented reality content is presented to correspond to position of the second sub-space 302. Thus, the real-world space information may be considered to provide a template for the arrangement of the plurality of instances of virtual-or-augmented reality content in the hybrid virtual space. In one or more examples, the virtual space of the second virtual-or-augmented reality content may be excluded from presentation in positions in the hybrid space corresponding to the first sub-space 301. Likewise, the virtual space of the first virtual-or-augmented reality content may be excluded from presentation in positions in the hybrid virtual space corresponding to the second sub-space 301. Thus, to summarise in a different way, the apparatus may be caused to provide for display of the hybrid virtual space such that it is aligned with the real-world space 200. Accordingly, the first virtual-or-augmented reality content may be presented in a virtual location that correspond to the first sub-space 301 and the second virtual-or-augmented reality content may be presented in a virtual location that corresponds to the second sub-space 301.

In one or more examples, the virtual spaces of the first and the second virtual-or-augmented reality content may be larger than their associated physical sub-spaces 301, 302. Accordingly, only a portion of the virtual space may be presented that fits within the associated sub-space 301, 302. In one or more examples, information identifying the location of an object of interest in the virtual-or-augmented reality content may be provided to the apparatus 101. The apparatus 101 may provide for presentation of the hybrid virtual space such that the object of interest may be positioned at a position that is within the sub-space (such as at the centre or other predetermined location).

In one or more examples, the first user 201 may be assigned a viewing location 606 in the hybrid virtual space 600. The viewing location 606 may be positioned relative to the virtual spaces of the first and second content to correspond to the position of the first user 201 in the real-world space 200 relative to the sub-spaces 301, 302. Accordingly, movement to the first sub-space 301 provides for movement to the part of the hybrid virtual space provided by the first virtual-or-augmented reality content and, likewise, movement to the second sub-space 302 provides for movement to the part of the hybrid virtual space provided by the second virtual-or-augmented reality content.

In one or more examples, the arrangement of content in the hybrid virtual space 600 may be determined by providing for presentation of:
i) at least part of the virtual space or visual imagery of the first virtual-or-augmented reality content at a position in the hybrid virtual space relative to a user viewing location 606 in the hybrid virtual space corresponding to the location of the first determined sub-space 301 relative to the first user 201 location in the real-world space 200; and
ii) at least part of the virtual space or the visual imagery of the second virtual-or-augmented reality content at a position in the hybrid virtual space relative to the user location 606 in the hybrid virtual space corresponding to the location of the second determined sub-space 302 relative to the first user 201 location in the real-world space 200.

In one or more examples, the hybrid virtual space 600 presented to the first user 201, as shown in example figure 6, comprises at least visual imagery of the first sub-space 301 of their room 200 and, adjacent thereto presented in a position corresponding to the second sub-space 302 of the first room 200, at least visual imagery of the first sub-space 501 of the second space 400. In this example, imagery of the third user 401 is shows at 603 and imagery of the fourth user 402 is shown at 604. Further, the apparatus 101 may provide the user 201 with imagery of the second user 202 at 602 and, optionally, imagery of the first user 201 at 601. The third user 603 may be presented with a similar hybrid virtual space 600 by the apparatus 101 or a third-user apparatus based on data from the apparatus 101. In one or more examples, along with the visual imagery, audio, such as spatial audio, may also be presented. In the present example, the VR communication may use spatial audio such that the audio from the other party (third user 401) is perceived to originate from a position corresponding to the visual imagery of said other party (the imagery of the third user 401 is shown as 603).

As the apparatus 101 may provide for display of a hybrid virtual space, which may involve communication with other parties, it may be useful to communicate this to other people in the real-world space 200 who are not presented with the hybrid virtual space and may therefore not be aware of how the real-world space is being used by others. Thus, the apparatus 101, based on second-user information indicative of the presence of the second user 202 identified in the same real-world space as the first user 201; provide signalling for providing for display to the second user 202 of at least an indication of at least part of the boundary of one or both of the first sub-space 301 and the second sub-space 302.

Accordingly, at least part of the layout of the hybrid virtual space 101 may be communicated to the second user 202 who may or may not be experiencing the first or second virtual-or-augmented reality content. Nevertheless, the signalling provided by the apparatus 101 may inform the second user of the different sub-spaces of the real-world space so that they may understand how the real-world space is being used by the first user 201. As mentioned above, said signalling may be used by VR apparatus 102 to present to the second-user the aforementioned boundary via headset 103B. Alternatively, the signalling may be provided to a projector, such as a light projector or holographic projector, for projecting into the real-world space. The use of a projector may be advantageous if the second user is not wearing the VR headset 103B.

The experience for the third user 401, who may also be using an apparatus 101, may be similar in that they are provided with a hybrid virtual space 600 which comprises at least visual imagery of the first sub-space 501 of their room 400 and, adjacent thereto presented in a position corresponding to the second sub-space 502 of their second real-world space 400, at least visual imagery of the first sub-space 301 of the first real-world space 200. In one or more examples, along with the visual imagery, audio, such as spatial audio, may also be presented.

Accordingly, the first user 201 and the third user 401 are able, by way of the hybrid virtual space 600, to view their own respective spaces 200, 400 (the first sub-spaces 301, 501 thereof) that are viewable by the other of the first and third user as well as the first sub-space 501, 301 of the other of the first and third user, in order to conduct the VR communication.

In order to provide such a hybrid virtual space, the apparatus may receive the second virtual-or-augmented reality content from an apparatus, such as a remote, third-user apparatus associated with the third user 401. As will be appreciated, the second virtual-or-augmented reality content in this example comprises virtual reality content comprising at least visual imagery of the third user 401 located in the second real-world space 400. The apparatus 101 may also receive virtual reality content comprising visual imagery of the first determined sub-space 301 of the real-world space 200 in which the user is located captured, for example, by content capture device 107.

In this example, the apparatus 101 provides for display of live, captured virtual reality content of the real-world space 200 in which the first user is located. This enables the first user 201 to see their own environment and view what the other party to the VR communication call may also see. This may be advantageous if the apparatus 101 is configured to modify what is captured of the real-world space 200. However, in one or more examples, the first virtual-or-augmented reality content may comprise augmented reality content. Thus, in such an example, the hybrid virtual space may comprise augmented reality content displayed over a real-world, direct, view of the first sub-space 301 of the first user's 201 real world space, while the second virtual reality content is presented based on a determination that the user looking toward the second sub-space 302 so that they can see the third user 401 and/or the third user's space.

Whether the apparatus 101 provides for display of live, captured virtual reality content of the first sub-space 301 to the first user 201 or augmented reality content while the first user 201 views the first sub-space 301 directly, the apparatus 101 may provide for visual and audio communication between the first user 201 and the third user 401 by way of presentation of the second virtual reality content in a position corresponding to the second sub-space 501.

The apparatus 101 may be configured to cause the presentation of an indication of the location of a person, such as the second user 202, who shares the space 200 with the first user 201. The indication may comprise captured video visual imagery of said person 202, or a marker or avatar graphic. The apparatus 101 may thus present, to the first user 201, the location of the second user 202 in the real-world space 200 relative to the user 201, such as determined by tracker 106, in the hybrid virtual space 600. This may help prevent the first user bumping into the second user when moving around the real-world space 200 while immersed in virtual reality.

Thus, while the second user 202 is located in the first sub-space 301, a direct view in augmented reality or a view of visual imagery 602 in virtual reality of the second user 202 may be provided to the first user 201 by the apparatus enabling them to know the position of the second user 202. However, if the second user 202 were to move to the second sub-space 302 of the real-world space or room 200, then a direct view of the second user 202 is not possible because the second user 202 would be obscured by the display of the second virtual reality content displayed in the hybrid virtual space 600, which is provided in a position that corresponds to the second sub-space 302. In this example, the apparatus 101 may advantageously provide for display of one or more of a marker, an avatar or other overlaid visual imagery that shows the current position of the second user 202. The current position of the second user may be determined based on the data from the tracker 106. The overlaid visual imagery may be overlaid over the second virtual reality content which shows the third user 401 and/or the space in which the third user 401 is located.

Thus, the first user 201, while conducting their VR communication with the third user 401 may be informed of the location of a person, i.e. the second user 202, who is in the same real-world space as them despite different sub-spaces of the real-world space 200 being used for display of different virtual-or-augmented reality content. To summarise, the location of the second user 202 in the real-world space 200 relative to the first user 201 is presented in the hybrid virtual space 600 at least when the second user 202 is located in the second sub-space 302. The first user 201 can therefore avoid bumping into the second user 202 as they move around the hybrid virtual space 600.

In order for the third user 401 to be presented with virtual reality content of the first user 201 and thus have the same experience as the first user 201, the apparatus 101 may be configured to provide third virtual-or-augmented content comprising at least captured visual imagery of the first determined sub-space 301 of the real-world space 200 in which the first user 201 is located to a third-user apparatus associated with the third user 401 for display to the third user 401.

In one or more examples, as described above, the hybrid virtual space 600 provided for display by the apparatus 101 is based on first virtual-or-augmented reality content comprising live captured VR content of said first user 201 and the first sub-space 301. Thus, the third virtual-or-augmented content provided to the third-user apparatus (not shown) may be the same as the first virtual reality content presented to the first user 201. The third-user apparatus may provide for display of a corresponding hybrid virtual space for the third user 401, similar to the apparatus 101 based on, in part, said third virtual-or-augmented content.

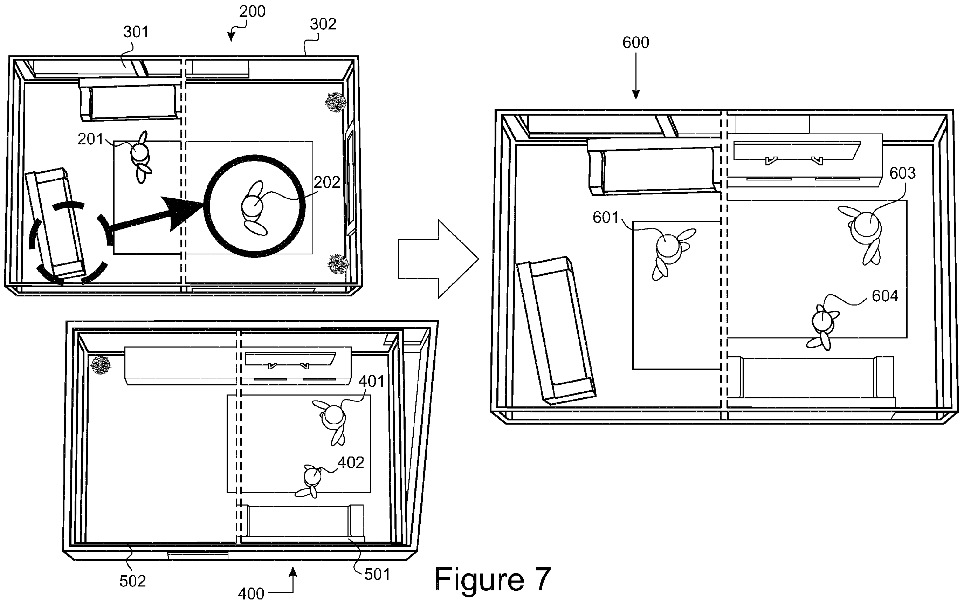

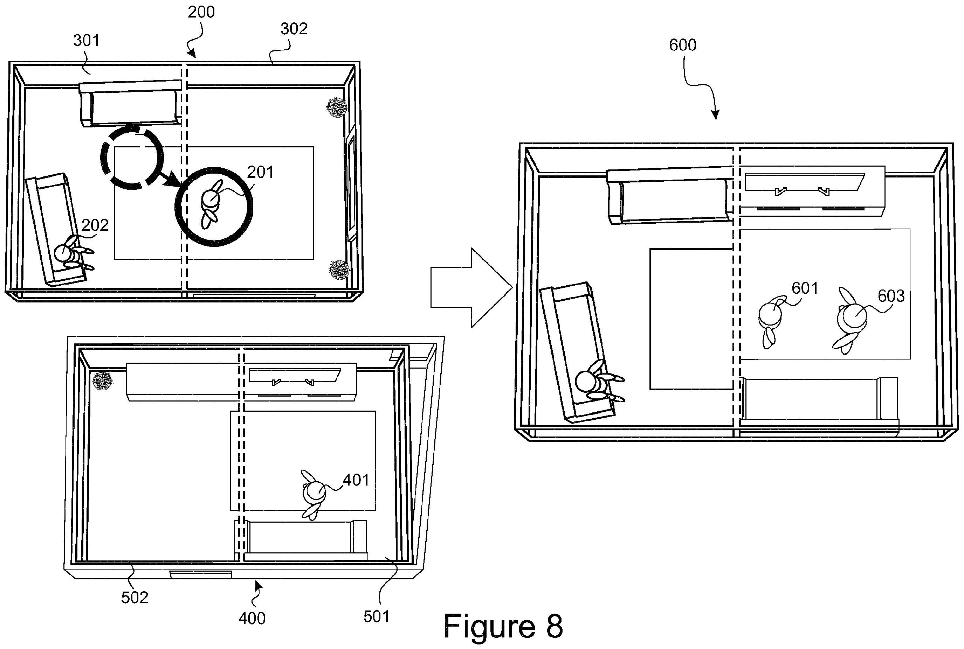

Example figures 7 and 8 illustrate functionality of the apparatus 101 based on different user movement in the real-world space 200, 400 in relation to what is displayed in the hybrid virtual space 600. In the examples that follow the third user 401 is presented with a hybrid virtual space 600 by a third-user apparatus (not shown) similar to the apparatus 101 and VR apparatus 102 in a similar way to the first user 201 being presented with the hybrid virtual space 600 by the apparatus 101, and VR apparatus 102.

Example figure 7 shows the first real world space 200 and the second real-world space 400. In the first real-world space 200, the second user 202 moves to part of the real-world space 200 outside the first sub-space 301 and, in particular, into the second sub-space 302. As mentioned above, the apparatus 101 may provide signalling for informing the second user 202 of the boundary of the sub-spaces 301, 302. The boundary may be projected into the real-world space 200 by a projector. This may be useful if the second user 202 is not using the presentation device 103B or any other display apparatus for AR/VR.

The second sub-space 302 may be considered a private space. As such, the apparatus 101 may prevent at least imagery of regions of the space 200 outside the first sub-space 302 from being passed to the third-user apparatus (and in some embodiments, audio from said regions). In one or more examples, the third virtual-or-augmented content is generated such that it does not include said imagery of the private space. In one or more examples, the third virtual-or-augmented content may be censored to hide visual imagery of the space 200 outside of the first sub-space.

For 6DoF virtual reality content, imagery from different directions may be required in order to generate such 6DoF virtual reality content. This may create a privacy issue in which it is difficult to limit the extent of the imagery that is captured, particularly when the space 200 is shared by others and when the space is a usually private setting, such as a user's home.

The apparatus 101, in relation to private visual imagery comprising the captured visual imagery of the real-world space 200 in which the first user 201 is located that is outside of the first determined sub-space 301, the apparatus 101 may be caused to provide for one of:
(i) hiding of said private visual imagery in the third virtual reality content; and
(ii) providing third virtual reality content which does not include said private visual imagery.

In one or more embodiments, the provision of a private space in one or more of the sub-spaces may be user selectable by the first user and/or second user.

Thus, although what is captured by content capture devices 107 may include visual imagery of parts of the space 200 outside the first sub-space 301, the apparatus 101 may modify said captured content to not include said imagery. In one or more examples, the apparatus 101 may use depth information from content capture devices 107 to exclude imagery originating from outside the sub-space 301, or by censoring the captured content. This may be achieved in various ways such as by comparing depth information from the content capture device to the configuration of the sub-space so that it can be determined if the imagery captured is located within the sub-space or outside it. In other examples, visual analysis of the imagery based on predetermined real-world space imagery may provide for automatic recognition of imagery from parts of the room not within the first sub-space for removal or censoring from the third virtual-or-augmented reality content. In one or more examples, the imagery captured of the parts of the space 200 outside the first sub-space 301 may be hidden by virtue of its replacement with imagery of the first sub-space 501.

Therefore, the second user 202, by being present in the second sub-space 302, that is outside the first sub-space 301, may not be visible to the third user 401 because the apparatus 101 ensures that regions outside the first sub-space 301, such as the second sub-space 302 are private. This is advantageous as the second user may be informed of the location of the sub-spaces and may therefore choose whether or not they appear in, are heard in or participate in the VR communication by way of placing themselves in the different sub-spaces of the real-world space 200.

The apparatus 101 may be configured to prevent not only visual imagery of the second user 202, when they are located outside the first sub-space 301, from being seen by the third user 401, but also audio from the second user 202 from being heard.

Thus, based on the second user being located in the real-world space outside of the first sub-space 301, the apparatus 101 may be caused to control the transmission of audio originating from the second user 202 in any VR communication provided thereby.

Thus, in one or more examples, the apparatus 101, based on the second-user-location information of the second user 202 in the real-world space 200 in which the first user 201 is located, provide for one of:
(i) muting audio from the second user 202 based on said second user 202 being located outside of the first determined sub-space 301; and
(ii) providing the third virtual-or-augmented reality content which does not include audio from the second user 202 based on said second user 202 being located outside of the first determined sub-space 301.

Accordingly, the second user 202, by their movement to a position outside the first sub-space 301, may prevent captured imagery and audio of themselves from being visible/audible to the third user 401 as part of the VR communication between the first and third users 201, 401.

In one or more examples, the signalling provided by the apparatus 101 for display of the boundaries of the sub-spaces 301, 302 may include one or more of privacy information and sub-space-use information.

The privacy information may provide for presentation of information in one or more of the sub-spaces indicative of whether or not the second user would be visible to persons outside the real-world space if they are present in said sub-space. Thus, the second user can be informed, such as by their second-user apparatus and presentation device 103B or by projection, by visual, textual, audio or graphical privacy indicators that define which of the sub-spaces 301, 302 are private and/or which are non-private (and used as part of a VR communication session).

The sub-space-use information may provide for presentation of information in one or more of the sub-spaces indicative of how one or more of the sub-spaces are being used by the first user. Thus, the second user can be informed, such as by their second-user apparatus and presentation device 103B or by projection, of how the sub-spaces are being used by the first user 201. Thus, text, audio or graphics such as "VR communication", "AR experience", "VR experience" or other indicators may be presented to the second user to inform them that the first user is participating in virtual reality communication with a third user, is experiencing augmented reality or experiencing virtual reality (or other examples) in one or more of the sub-spaces.

In one or more examples, the second user may be the one experiencing the hybrid virtual space. Accordingly, the apparatus 101 may be configured to provide, similarly, for presentation of indications based on one or both of privacy information and sub-space-use-information received from a second-user apparatus. Thus, if it is the second user who is engaged in VR communication, the first user apparatus 101 can be notified by signalling provided thereto by the second-user apparatus.

To summarise, the apparatus 101 may be caused to provide signalling to provide for presentation, via a presentation device such as headset 103B or in the real-world space such as by a projector, for the benefit of the second user of one or more of:
a) an area of the first sub-space;
b) an area of the second sub-space;
c) an indication of whether or not virtual-or-augmented reality content is being captured in the first sub-space;
d) an indication of whether or not virtual-or-augmented reality content is being captured in the second sub-space;
e) an indication of which of the plurality of sub-spaces is private in that at least visual imagery of said sub-space is excluded from captured virtual-or-augmented reality content;
f) an indication of which of the plurality of sub-spaces is private in that at least audio from one or more audio sources identified as being located in said sub-space is excluded from captured virtual-or-augmented reality content.

Returning to the movement of the user shown in example figure 7, the hybrid virtual space 600 presented to the presentation devices 103A of the first and third user is shown in Figure 7. As the second user 202 has moved to the second sub-space 302, they are no longer visible (or audible) in the hybrid virtual space 600. Accordingly, the second user, by way of signalling from the apparatus 101 may have been presented with an indication that the sub-space 301 in which they were present was not private, while the second sub-space 302 was private. The second user 202 may then have known where in the real-world space to move to so that they are no longer visible or audible in the hybrid virtual space 600 experienced by the first user 201 and the third user 401.

We will now consider an embodiment of the apparatus 101 provided when the first user 201 moves to the second sub-space 302 while conducting VR communication, with reference to example figure 8.

Similar to figure 7, example figure 8 shows the first real world space 200 and the second real-world space 400. In the first real-world space 200, the first user 201 moves to the second sub-space 302. The first user 201 is presented with the hybrid virtual reality space and thus, to them, such movement will be perceived as moving into a virtual representation of the first sub-space 501 of the third user 603.

The second virtual reality content is, in this example, 6DoF content and therefore the apparatus 101 may allow for the first user 201 to freely explore the second virtual reality content such that appears they are in a room with the third user 603. However, the first user 201 has moved to a part of their real-world space 200 which may be private, as discussed above. Accordingly, the apparatus 101 may have functionality to effectively maintain privacy of persons in the second sub-space 302 while providing for VR communication with the third user 401.

Thus, in one or more examples, the apparatus 101 may be caused, based on the first user 201 moving to a location in the second determined sub-space 302 of the real-world space 200;
provide for sending to the third-user apparatus associated with the third user 603 for providing a visual indication of the first user 201 thereto, one or both of:
i) first-user-location information in the hybrid virtual space 600 to instruct the rendering, by the third-user apparatus to the third user 401, of at least an avatar 601 of the first user 201 at a position corresponding to the first-user-location information;
ii) first user-location information in the hybrid virtual space and captured visual imagery 601 of the first user 201 isolated from imagery of the real-world space 200 outside the first determined sub-space 301 to instruct the rendering, by the third-user apparatus to the third user, of the captured visual imagery 601 of the first user 201 overlaid at a position corresponding to the user-location information.

Thus, the apparatus 101 may be configured to provide information such that captured visual imagery 601 of the first user 201 or a representation, such as an avatar thereof, may be presented to the third user 401 at a location such that they appear to be present in the first sub-space 501 of the third user 401.

A similar effect may be applied based on the third user 401 moving to their second sub-space 502. Accordingly, based on signalling indicative of the third user 401 moving to a location in their second determined sub-space 502 of their real-world space 400 and based on one or both of:
i) third-user-location information of said signalling indicative of the location of the third user in the hybrid virtual space 600; and
ii) third-user-location information of said signalling indicative of the location of the third user in the hybrid virtual space 600 and captured visual imagery, provided in said signalling, of the third user 401;
received by the apparatus 101, provide for display, by the apparatus 101, to the first user 201, one of, respectively,
i) at least an avatar 603 of the third user 401 at a position corresponding to the user-location information; and
ii) captured visual imagery 603 of the third user401 overlaid at a position corresponding to the user-location information.

When presenting audio, including spatial audio, it may be advantageous to apply effects to the audio to replicate how the audio would be heard in a particular room. In one or more examples, the audio from the first, second and third users may be captured from close up microphones. Audio captured of an audio source by close up microphones may sound different to audio heard by a user in a room with the audio source because the user would hear the same audio but it would typically include component echos and reverberations caused by the sound waves from the audio source interacting with the surfaces in the room. Thus, in one or more examples, an audio effect termed a Room Impulse Response may be applied to the audio presented in the hybrid virtual space which may make them sound as if heard in a particular room. The Room Impulse Response may comprise an audio processing function that simulates the effect of the surfaces of a particular room. The Room Impulse Response may also comprise a function of the user's location in the particular room relative to the audio source. Thus, if the third-user is present in a hard walled, and therefore echo-prone, room, the apparatus may apply a Room Impulse Response function to replicate such an audio environment based on the first user moving to the second sub-space 302.

Thus, in one or more examples, the apparatus 101 may be caused, based on received third-user location information indicating that the location of the third user in the hybrid virtual space corresponds to a position presented in the first sub-space, to provide for application of a room impulse response function to audio from the third-user such that the audio of the third user is consistent with the third user being present in the real-world space 200. Accordingly, given that the hybrid virtual space comprises a virtual representation of the first-user's real world space and the third-user's real world space, corresponding room impulse response functions may be applied based on the location of the first user and/or the third user in the hybrid virtual reality space, the room impulse response functions representing how audio would sound if the user was physically present in the first-user's real world space and the third-user's real world space.

In one or more examples, the apparatus 101 may provide for presentation of received real-world space object information as part of the hybrid virtual space 600 to inform the first user 201 of one or more objects in the real-world space 200 that may be obscured by the display of the hybrid virtual space 600. Thus, furniture or other real-world objects may be displayed in said hybrid virtual space 600, in particular in said second sub-space 302, so that the first user 201 does not bump into them while exploring the second virtual reality content which is displayed in a position corresponding to the second sub-space 302. The received real-world space object information may be based on camera imagery from one or more sensors configured to determine the location of objects in the real-world space 200.

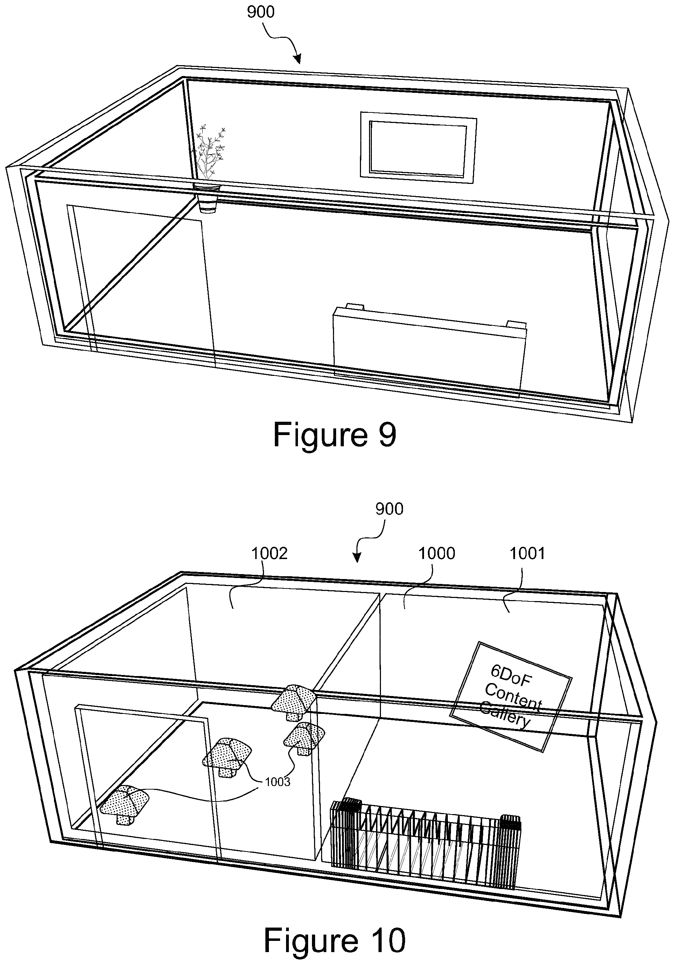

Example figures 9 to 13 illustrate a second example embodiment. Example figure 9 shows an example real-world space 900 comprising an office, although any room, part of a larger room or outdoor space may be used.

As in the previous example, real-world space information may divide the real-world space 900 into sub-spaces. Figure 10 shows the same real-world space 900 having been divided into first and second sub-spaces 1001, 1002. Thus, in this example, one part of the real-world space 900, which is available for a virtual experience, happens to have been designated first sub-space 1001 and a different part of the same room happens to have been designated second sub-space 1002. Figure 10 also shows visual imagery 1003 of objects of the virtual reality content displayed in a hybrid virtual space in a position corresponding to the second sub-space 1002. Accordingly, figure 10 also shows the hybrid virtual reality space 1000.

In this example, the first sub-space 1001 is designated for an augmented reality experience and the second sub-space 1002 is designated for a virtual reality experience. In particular, the first virtual-or-augmented reality content comprises augmented reality content for display in a position corresponding to said first sub-space 1001. The second virtual-or-augmented reality content comprises virtual reality content for display in a position corresponding to said second sub-space 1002.

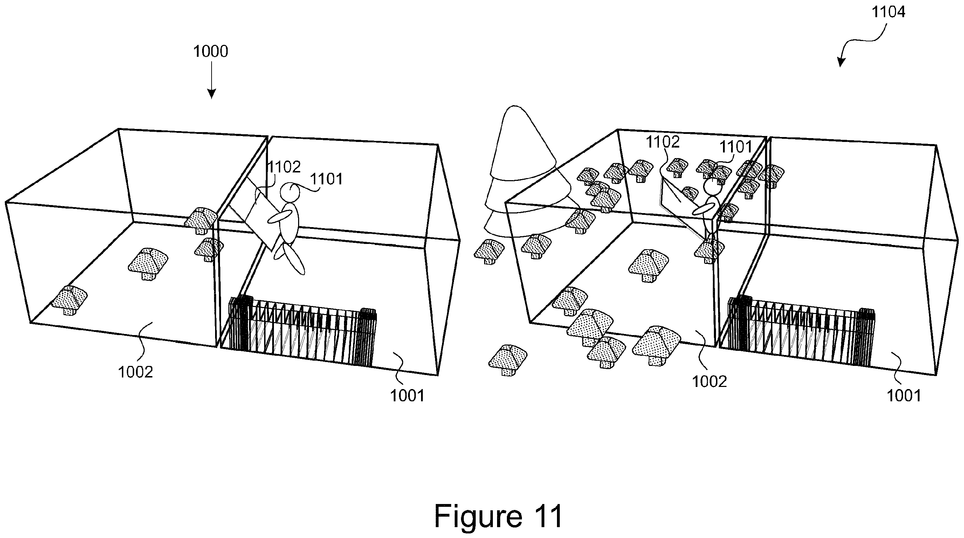

Example figure 11 shows over the two images of the hybrid virtual space, a first user 1101 provided with a hybrid virtual space moving between the first sub-space 1001 and the second sub-space 1002. While in the first sub-space 1001, the first user 1101 may work and observe what is occurring in the virtual reality content by looking towards the second sub-space 1002. As the apparatus 101 provides for display, in the hybrid virtual space, of the virtual reality content at a position corresponding to the second sub-space 1002, the user effectively has a "window" into the virtual space of the virtual reality content.

While not shown in figure 11, a second person or user may be present in the real-world space 900. As in the previous example, the second user may not be experiencing the same hybrid virtual space 1000 as the user 1101 and may not be readily aware that the user 1101 may be experiencing different content in different parts of the room with, possibly, different levels of visibility for the first user of persons in the room 900 and different privacy for the second user. However, as in the previous example, the apparatus 101 may provide signalling such that the boundary of the sub-spaces 1001, 1002 may be presented, at least in part to the second user. As before, said signalling may be provided to a second-user apparatus (not shown) for presentation via a presentation device such as a headset or glasses, may be provided to a projector for projection into the real-world space 900.

In one or more examples, the first user 1101 may control the presentation of the virtual reality content using a user interface (UI) such as virtual UI 1102.

The first user 1101 may enter the second sub-space 1002 and thus the part of the hybrid virtual space 1000 that comprises the virtual space of the virtual reality content.

The apparatus 101 may provide for display of a modified hybrid virtual space 1100 or may provide for removal of the hybrid virtual space 1100 from display and replace it with a different virtual space based on the user's 1101 movement between the sub-spaces 1001, 1002 with the virtual Ul.

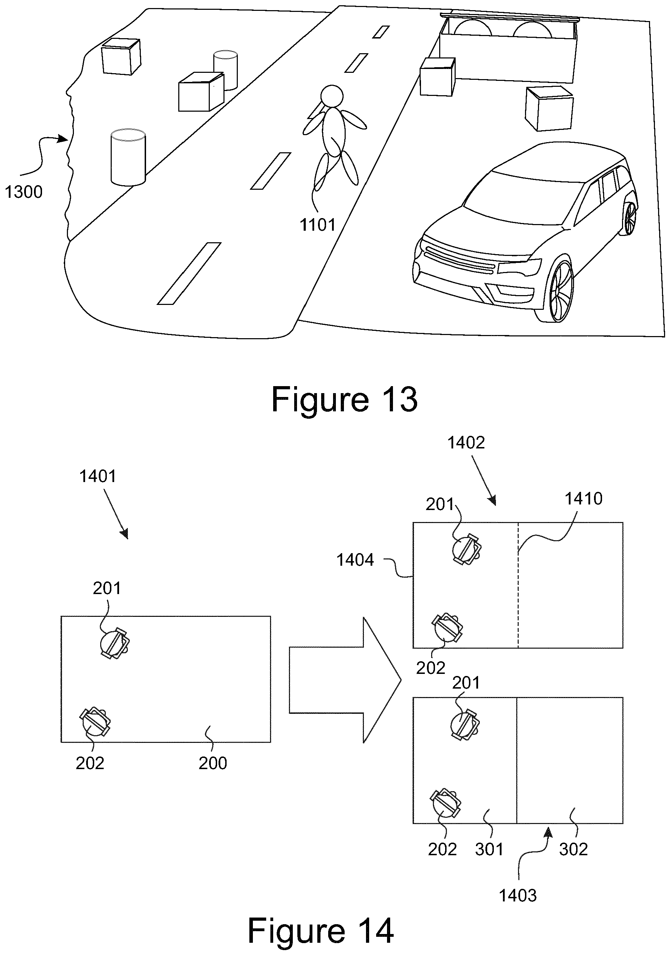

In one or more examples, based on the user-movement of the user 1101 into the second sub-space 1002 without the virtual Ul 1102, the apparatus 101 may provide for removal of the hybrid virtual space 1100 from display and provide for display, instead, of a virtual space based on the virtual reality content in positions that cover a volume greater than the second sub-space 1002, as shown in figure 13. Example figure 13 shows a virtual space 1300 based on the virtual reality content which extends beyond the confines of the second sub-space 1002, such as into the first sub-space 1001.

In one or more examples, based on the user-movement of the user 1101 into the second sub-space 1002 with the virtual Ul 1102, the apparatus 101 may provide for display of a modified hybrid virtual space 1104 in which the virtual space of the virtual reality content is displayed at positions inside and outside the second sub-space 1002 but not within the first sub-space 1001. This may be considered as an immersive preview of the virtual reality content. Accordingly, by moving into the second sub-space 1002, the user 1101 may preview a larger volume of the virtual reality space, but is still shown the first sub-space 1001. The view of the first sub-space 1001 may be provided from camera imagery of the first sub-space 1001. In one or more other examples, the apparatus 101 may provide for direct viewing of the first sub-space 1001 by not displaying, in the modified hybrid virtual space, the virtual space of the virtual reality space based on when the user 1101 looks towards said first sub-space. Thus, it may be envisaged that the view of the modified hybrid virtual space is provided by VR goggles or glasses that, when no imagery is provided to them or when they are instructed to be transparent, allow for viewing of the real world. Thus, the apparatus 101 may provide the user 1101 with a view of the first sub-space 1001 by one or more of i) not displaying the visual content in a particular part of the hybrid virtual space based on a viewing direction of the user being toward the first sub-space 1001; ii) providing signalling to provide a transparent window in a particular part of the hybrid virtual space based on a viewing direction of the user being toward the first sub-space 1001; iii) providing camera imagery of the first sub-space 1001.

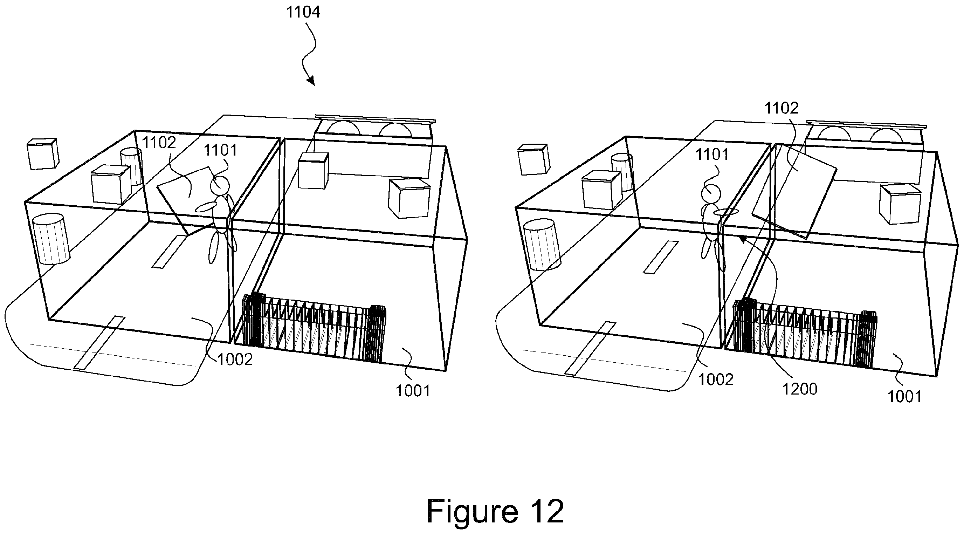

Example figure 12 shows the user 1102 provided with the aforementioned immersive preview in a modified hybrid virtual space 1104. In one or more examples, the apparatus 101 may be configured, based on received user-input, to provide for removal of the modified hybrid virtual space 1104 from display and display, instead, a virtual space based on the virtual reality content. The user-input, in one or more examples, is provided by the user 1102 throwing (shown at 1200) the virtual Ul away, although other ways of providing user-input are possible such as via a physical interface, voice command or gesture. Accordingly, the apparatus 101 may provide for display of the virtual reality content without the augmented reality content as shown in figure 13.

Example figure 14 shows a third embodiment similar to the first example embodiment in that it involves VR communication as part of the hybrid virtual space. In this example, the same reference numerals as the first embodiment have been used. Further, in this example, the second user 202 is experiencing virtual-or-augmented reality content in the same real-world space 200 as the first user 201.

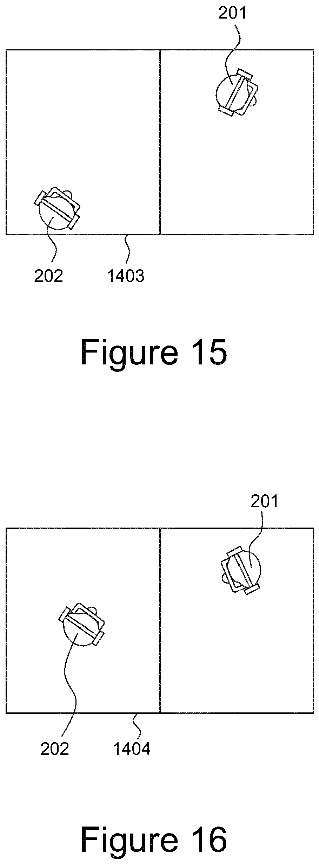

Thus, with reference to the first and second virtual-or-augmented reality content mentioned above, in this example;
a) the first virtual-or-augmented reality content comprises first virtual reality content, the first user 201 experiencing said first virtual reality content with the second user 202; and
b) the second virtual-or-augmented reality content comprises second virtual reality content comprising at least visual imagery of a third user (not shown in figures 14 and 15) located in a different real-world space suitable for conducting VR communication.

Accordingly, the apparatus 101 may be, at least in part, caused to provide for visual and audio communication between the first user 201 and the third user (not shown) at least in the virtual space of the second virtual reality content as well as a shared virtual reality experience between the first user 201 and the second user 202 at least in the virtual space of the first virtual reality content.

The left-hand side 1401 of figure 14 shows the shared virtual reality experience between the first user 201 and the second user 202 in the virtual space of the first virtual reality content prior to commencement of VR communication for the first user 201. The virtual space of the virtual reality content is shown in positions extending over the first and second sub-spaces, because at this time, no hybrid virtual reality space is provided to either user 201, 202.

An initiation event may occur which causes the apparatus to provide for display of the hybrid virtual space. The initiation event may be based on user-input by the first user or the second user. The initiation event may comprise the first user 201 providing user input indicating user acceptance of an incoming virtual reality communication request from a third user in a different real-world space; or, alternatively, user acceptance by the third user of an outgoing virtual reality communication request from the first user 201, the third user located in a different real-world space.

The right-hand side 1402 of figure 14 shows the apparatus 101 providing the first user 201 with display of a hybrid virtual reality space 1403 comprising the first and second virtual reality content in positions corresponding to the first sub-space 301 and the second sub-space 302 respectively. The right-hand side 1402 also shows the apparatus 101 or a second-user apparatus providing for display to the second user 202 of the same virtual reality space as shown on the left-hand side 1401. However, signalling provided by the apparatus 101 provides for display to the second user 202 of at least an indication 1410 of at least part of the boundary of one or both of the first sub-space and the second sub-space 301, 302.

The hybrid virtual reality space 1403 provided by the apparatus 101 to the first user 201 is similar to that described in the first embodiment. However, the hybrid virtual space 1403 in this example comprises a combination of the virtual space of the first virtual reality content that the first user 201 is experiencing with the second user 202 presented in a position corresponding to the first sub-space 301 and the virtual space of the second virtual reality content that comprises at least visual imagery of the third user.

Despite the first user 201 being presented with the hybrid virtual space, first-user location information may be provided, such as by the apparatus 101 or tracker 106, so that the position of the first user 201 in the real-world space 200 may be presented to the second user 202. Likewise, second-user location information may be received by the apparatus 101 so that the position of the second user 202 in the real-world space 200 may be presented to the first user 201 in the hybrid virtual space 1403.

In order for the third user (not shown in figured 14 and 15) to be presented with virtual reality content of the first user 201 and thus experience the communication as VR communication, the apparatus 101 may be configured to provide third virtual-or-augmented content comprising at least captured visual imagery of the first determined sub-space 301 of the real-world space 200 in which the first user 201 is located to a third-user apparatus associated with the third user for display to the third user. In one or more examples, the third virtual-or-augmented content may comprise the first virtual reality content that first 201 and second 202 user were experiencing prior to the initiation event. Accordingly, the third user would be presented with VR content of the first user in the virtual space of the first virtual reality content.

As before, in one or more examples, the signalling provided by the apparatus 101 for display of the boundaries of the sub-spaces 301, 302 to the second user 202 may include one or more of privacy information and sub-space-use information. Accordingly, the second user 202 may be made aware of how the sub-spaces 301, 302 are being used and may choose to move to one of the sub-spaces so that they are included/not included in the VR communication between the first user 201 and the third user.

Thus, in summary, the first user is provided with a hybrid virtual reality space 1402 such that in a position corresponding to the first sub-space 301 they see the virtual reality space of the first virtual reality content as well as a virtual representation of the second user 202 and, in the second sub-space 302 they see the second virtual reality content of the third user for VR communication. Further, in one or more examples, objects or persons in the first sub-space 301 may be visible to the third user (or, more generally, objects or persons in a subset of the plurality of sub-spaces 301, 302). The apparatus 101, 102 or second-user apparatus may provide for display of the virtual reality space of the first virtual reality content to the second user while the first user is presented with the hybrid virtual space 1403. The second-user 202 may be free to use the whole real-world space 200, including the first and second sub-spaces 301, 302 for exploring the virtual space of the first virtual reality content. However, when the second user 202 is present in the first sub-space 301 they may be visible/heard by the third user but may be hidden from the third user when outside the first sub-space 301, similar to the first embodiment.

In one or more examples, the apparatus 101 may manage the hybrid virtual space 1403 differently for one or both of the first and second users 201, 202.

For example, with respect to the first user 201, the apparatus 101 may provide for presentation of the hybrid virtual space 1403 and the apparatus 101 may provide for visual and audio communication between the first user and the third user based on first-user location information indicating that the first user 201 is in the second sub-space 302. The first-user location information may comprise information from tracker 106 or one or more other sensors. If the first user 201 is in the first sub-space 301, visual and/or audio communication may not be provided. Thus, the third virtual-or-augmented reality content provided to the third-user apparatus may be provided based on the first-user location information indicating that the first user 201 is in the second sub-space 302. The third virtual-or-augmented reality content may comprise captured content of the second sub-space 302. Accordingly, in one or more examples, the first user 201 is required to be in the second sub-space 302 to conduct VR communication with the third user.

Figure 16 illustrates the VR communication between the first user 201 and the third user ending. The apparatus 101 may provide for removal of the hybrid virtual space 1403 from display and display, instead, of a virtual space based on the first virtual reality content, similar to prior to initiation event.

It will be appreciated that virtual reality content may change with time. Thus, the apparatus 101 may provide for temporal pausing of the first virtual reality content while the hybrid virtual space is presented to the first user 201 or not.

Thus, in one or more examples, based on the first user 201 having been consuming first virtual reality content prior to the initiation event, the apparatus 101 may provide for the pausing of the passage of time through the first virtual reality content while the hybrid virtual space is presented until a termination event, which may comprise the ending of the visual and audio communication between the first user 201 and the third user.

Accordingly, when the VR communication ends, the shared experience of the first virtual reality content between the first user 201 and the second user 202 may be temporally un-aligned.

In one or more examples, based on one or both of:
(i) an interaction between the first user and the second user in the virtual space of the first virtual reality content;
(ii) the first user 201 moving to the first determined sub-space 301 from the second determined sub-space 302;
the apparatus 101 may provide for synchronisation of the time through the first virtual reality content for the first user and the second user to thereby enable a shared experience of the first virtual reality content at a common time through the first virtual reality content.

In one or more examples, the synchronisation causes the time through the first virtual-or-augmented reality content for the first user 301 to change to the time through the first virtual reality content based on the time experienced by the second user 302 at the time of said synchronisation. Thus, time jumps forward for the first user 301 although, alternatively, time could be synchronised to the first user's time thus resulting in time for the second user jumping back.

In one or more examples, during the VR communication, the second user may be presented with audio of the first user and, optionally, the third user via a presentation device, such as headphones 105B while they themselves consume the first virtual reality content. Audio effects may be applied to the audio of the first user presented to the second user to emphasise when the first user is talking towards the second user. For example, if the first user while conducting their VR communication with the third user wishes to ask something of the second user, they may turn towards the second user. However, the second user may be immersed in the first virtual reality content despite being able to hear the first user. Thus, the apparatus 101 may provide signalling to the second-user apparatus for presentation of audio of the first user to the second user with an audio effect based on determination that the first user is orientated towards the second user. The audio effect may comprise an increase in volume relative to the second user not looking towards the second user, and/or may comprise use of a different room impulse response.

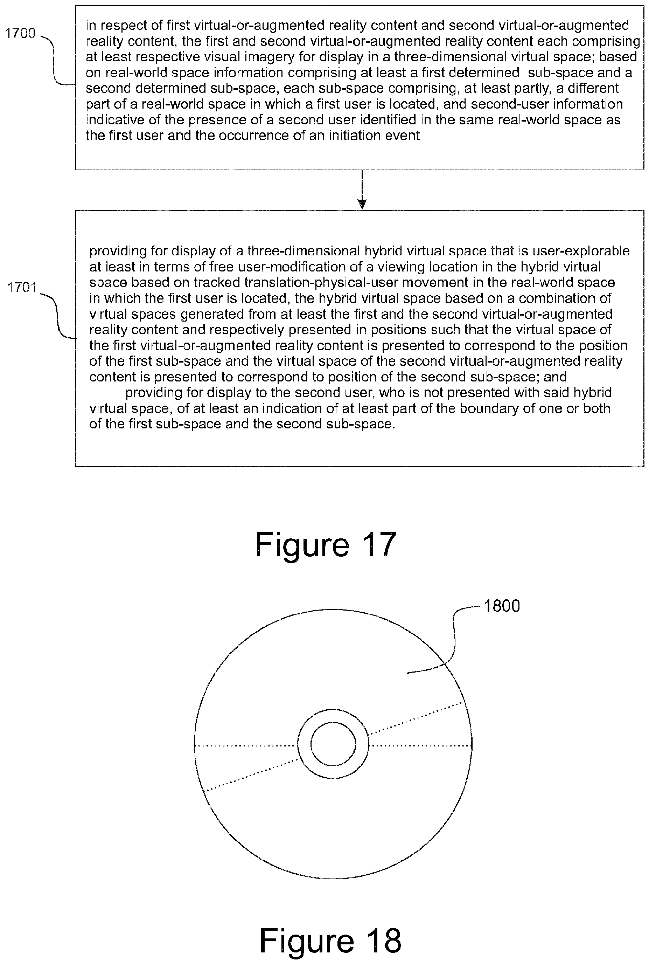

Figure 17 shows a flow diagram illustrating the steps of, in respect of 170 first virtual-or-augmented reality content and second virtual-or-augmented reality content, the first and second virtual-or-augmented reality content each comprising at least respective visual imagery for display in a three-dimensional virtual space;
based on real-world space information comprising at least a first determined sub-space and a second determined sub-space, each sub-space comprising a different part of a real-world space in which a first user is located, and second-user information indicative of the presence of a second user identified in the same real-world space as the first user and the occurrence of an initiation event;
providing 1701 for display of a three-dimensional hybrid virtual space that is user-explorable at least in terms of free user-modification of a viewing location in the hybrid virtual space based on tracked translational-physical-user movement in the real-world space in which the first user is located, the hybrid virtual space based on a combination of virtual spaces generated from at least the first and the second virtual-or-augmented reality content and respectively presented in positions such that the virtual space of the first virtual-or-augmented reality content is presented to correspond to the position of the first sub-space and the virtual space of the second virtual-or-augmented reality content is presented to correspond to position of the second sub-space; and
providing signalling to provide for display to the second user, who is not presented with said hybrid virtual space, of at least an indication of at least part of the boundary of one or both of the first sub-space and the second sub-space.

Figure 18 illustrates schematically a computer/processor readable medium 1800 providing a program according to an example. In this example, the computer/processor readable medium is a disc such as a digital versatile disc (DVD) or a compact disc (CD). In some examples, the computer readable medium may be any medium that has been programmed in such a way as to carry out an inventive function. The computer program code may be distributed between the multiple memories of the same type, or multiple memories of a different type, such as ROM, RAM, flash, hard disk, solid state, etc.

In one or more of the embodiments described herein one or more of the first, second and third user may be presented with a virtual space generated from one instance of virtual-or-augmented reality content or a hybrid virtual space generated from two or more instances of virtual-or-augmented reality content by a respective first-user, second-user or third-user apparatus. However, in one or more other embodiments, a combined apparatus may be configured to provide for the aforementioned presentation of virtual/hybrid spaces for two or more of the first, second and third user. Communication between the first-user, second-user, third-user or combined apparatus may be provided to enable them to receive information on what is being provided to one or more of the other users such that the example signalling/information may be provided as appropriate.

User inputs may be gestures which comprise one or more of a tap, a swipe, a slide, a press, a hold, a rotate gesture, a static hover gesture proximal to the user interface of the device, a moving hover gesture proximal to the device, bending at least part of the device, squeezing at least part of the device, a multi-finger gesture, tilting the device, or flipping a control device. Further the gestures may be any free space user gesture using the user's body, such as their arms, or a stylus or other element suitable for performing free space user gestures.

The apparatus shown in the above examples may be a portable electronic device, a laptop computer, a mobile phone, a Smartphone, a tablet computer, a personal digital assistant, a digital camera, a smartwatch, smart eyewear, a pen based computer, a non-portable electronic device, a desktop computer, a monitor, a smart TV, a server, a wearable apparatus, a virtual reality apparatus, or a module/circuitry for one or more of the same.

Any mentioned apparatus and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus, the apparatus comprising means configured to:
in respect of first virtual-or-augmented reality content and second virtual-or-augmented reality content, the first and second virtual-or-augmented reality content each comprising at least respective visual imagery for display in a three-dimensional virtual space;
based on real-world space information comprising at least a first determined sub-space and a second determined sub-space, each sub-space comprising, at least partly, a different part of a real-world space in which a first user is located, and second-user information indicative of the presence of a second user identified in the same real-world space as the first user and the occurrence of an initiation event;
provide for display of a three-dimensional hybrid virtual space that is user-explorable at least in terms of free user-modification of a viewing location in the hybrid virtual space based on tracked translational-physical-user movement in the real-world space in which the first user is located, the hybrid virtual space based on a combination of virtual spaces generated from at least the first and the second virtual-or-augmented reality content and respectively presented in positions such that the virtual space of the first virtual-or-augmented reality content is presented to correspond to the position of the first sub-space and the virtual space of the second virtual-or-augmented reality content is presented to correspond to position of the second sub-space; and
provide for display to the second user of at least an indication of at least part of the boundary of one or both of the first sub-space and the second sub-space, said indication independent of the display of the hybrid virtual space to the second user.

2. The apparatus of claim 1, wherein;
a) the first virtual-or-augmented reality content comprises one of (i) virtual reality content comprising visual imagery of the first determined sub-space of the real-world space in which the first user is located and (ii) augmented reality content; and
b) the second virtual-or-augmented reality content comprises virtual reality content comprising at least visual imagery of a third user located in a different real-world space;
the apparatus, at least in part, caused to provide for visual and audio communication between the first user and the third user.

3. The apparatus of claim 1, wherein;
a) the first virtual-or-augmented reality content comprises first virtual reality content, the first virtual reality content provided for consumption by the first user and the second user; and
b) the second virtual-or-augmented reality content comprises second virtual reality content comprising at least visual imagery of a third user located in a different real-world space;
the apparatus, at least in part, caused to provide for visual and audio communication between the first user and the third user at least in the virtual space of the second virtual reality content as well as a shared virtual reality experience between the first user and the second user at least in the virtual space of the first virtual reality content.

4. The apparatus of claim 2 or claim 3, wherein;
the apparatus is caused to provide third virtual-or-augmented content comprising at least captured visual imagery of the first determined sub-space of the real-world space in which the first user is located to a third-user apparatus associated with the third user.

5. The apparatus of any preceding claim wherein based on information that virtual-or-augmented reality content is provided for presentation by a second-user apparatus associated with the second user, the virtual-or-augmented reality content comprising at least visual imagery for display in a three-dimensional virtual space that is user-explorable at least in terms of free user-modification of a viewing location in the virtual space based on tracked translational-physical-user movement of the second user in at least part of the first and second determined sub-spaces of the real-world space, which the second user shares with the first user; wherein, based on the initiation event, the apparatus is caused to provide one or both of:
(i) transmittal of first-user-location information, to the second-user apparatus, comprising the location of the first user in the real-world space for display of the location of the first user at a corresponding location in the virtual space presented to the second user; and
(ii) transmittal of the real-world space information, to the second-user apparatus, for display of at least an indicator in the virtual space presented to the second user of the location of the second determined sub-space.

6. The apparatus of claim 2 or claim 3, wherein based on ending of the visual and audio communication between the first user and the third user, provide for display of a three-dimensional virtual space with the visual imagery of the first virtual-or-augmented reality content at positions corresponding to both the first and second determined sub-space to replace the hybrid virtual reality space.

7. The apparatus of any preceding claim, wherein based on the first virtual-or-augmented reality content being provided for consumption by the first user prior to the initiation event, the apparatus provides for the pausing of the passage of time through the first virtual-or-augmented reality content until a termination event.

8. The apparatus of claim 4, wherein
in relation to private visual imagery comprising the captured visual imagery of the real-world space in which the first user is located that is outside of the first determined sub-space, the apparatus is caused to provide for one of:
(i) hiding of said private visual imagery from the third user in the third virtual reality content and (ii) providing the third virtual reality content which does not include said private visual imagery.

9. The apparatus of claim 3 wherein based on the second-user-location information of the second user in the real-world space in which the first user is located, provide for one of:
(i) muting audio from the second user based on said second user being located outside of the first determined sub-space; and
(ii) providing the third virtual-or-augmented reality content which does not include audio from the second user based on said second user being located outside of the first determined sub-space.

10. The apparatus of claim 2 or claim 3 wherein based on a determination that the first user has moved to a location in the second determined sub-space of the real-world space;
provide for sending to a third-user apparatus associated with the third user for providing imagery of the first user thereto one or both of:
i) user-location information in the hybrid virtual space to instruct the rendering, by the third-user apparatus to the third user, of at least an avatar of the first user at a position corresponding to the user-location information;
ii) user-location information in the hybrid virtual space and captured visual imagery of the first user isolated from imagery of the real-world space outside the first determined sub-space to instruct the rendering, by the third-user apparatus to the third user, of the captured visual imagery of the first user overlaid at a position corresponding to the user-location information.

11. The apparatus of claim 1, wherein the initiation event comprises one of:
i) first user acceptance of an incoming virtual reality communication request from a third user in a different real-world space;
ii) user acceptance by a third user of an outgoing virtual reality communication request from the first user, the third user located in a different real-world space;
iii) a user request.

12. The apparatus of claim 1, wherein;
i) the first virtual-or-augmented reality content comprises first augmented reality content comprising augmented reality imagery for augmentation of the first determined sub-space of the real-world space and the hybrid virtual space comprises said augmented reality imagery displayed at one or more positions within the first determined sub-space; and
ii) the second virtual-or-augmented reality content comprises second virtual reality content.

13. The apparatus of claim 12, wherein the first augmented reality content at least comprises a virtual user interface, the apparatus caused to provide for display of the virtual user interface and wherein user input to said virtual user interface provides, in said provision of the hybrid virtual space, for one or more of:
a) control of the display of the second virtual reality content;
b) modification of the second virtual reality content; and
c) control of the display of the first augmented reality content in the first sub-space.

14. A method, the method comprising:
in respect of first virtual-or-augmented reality content and second virtual-or-augmented reality content, the first and second virtual-or-augmented reality content each comprising at least respective visual imagery for display in a three-dimensional virtual space;
based on real-world space information comprising at least a first determined sub-space and a second determined sub-space, each sub-space comprising, at least partly, a different part of a real-world space in which a first user is located, and second-user information indicative of the presence of a second user identified in the same real-world space as the first user and the occurrence of an initiation event;
providing for display of a three-dimensional hybrid virtual space that is user-explorable at least in terms of free user-modification of a viewing location in the hybrid virtual space based on tracked translational-physical-user movement in the real-world space in which the first user is located, the hybrid virtual space based on a combination of virtual spaces generated from at least the first and the second virtual-or-augmented reality content and respectively presented in positions such that the virtual space of the first virtual-or-augmented reality content is presented to correspond to the position of the first sub-space and the virtual space of the second virtual-or-augmented reality content is presented to correspond to position of the second sub-space; and
providing for display to the second user, who is not presented with said hybrid virtual space, of at least an indication of at least part of the boundary of one or both of the first sub-space and the second sub-space.

15. A computer readable medium comprising computer program code stored thereon, the computer readable medium and computer program code being configured to, when run on at least one processor, perform the method of:
in respect of first virtual-or-augmented reality content and second virtual-or-augmented reality content, the first and second virtual-or-augmented reality content each comprising at least respective visual imagery for display in a three-dimensional virtual space;
based on real-world space information comprising at least a first determined sub-space and a second determined sub-space, each sub-space comprising, at least partly, a different part of a real-world space in which a first user is located, and second-user information indicative of the presence of a second user identified in the same real-world space as the first user and the occurrence of an initiation event;
providing for display of a three-dimensional hybrid virtual space that is user-explorable at least in terms of free user-modification of a viewing location in the hybrid virtual space based on tracked translational-physical-user movement in the real-world space in which the first user is located, the hybrid virtual space based on a combination of virtual spaces generated from at least the first and the second virtual-or-augmented reality content and respectively presented in positions such that the virtual space of the first virtual-or-augmented reality content is presented to correspond to the position of the first sub-space and the virtual space of the second virtual-or-augmented reality content is presented to correspond to position of the second sub-space; and
providing for display to the second user, who is not presented with said hybrid virtual space, of at least an indication of at least part of the boundary of one or both of the first sub-space and the second sub-space.
